# EUROPEAN PATENT APPLICATION

(11) **EP 4 700 799 A1**
(43) Date of publication of application: **25.02.2026**
(21) Application number: 24810396.2
(22) Date of filing: 21.05.2024
(51) Int. Cl.: H01B 5/14, H01B 13/00, G06F 3/041

(54) **CONDUCTIVE FILM, TOUCH COMPONENT, AND PREPARATION METHODS THEREFOR**

(30) Priority: 25.05.2023 CN 202310602223; 25.05.2023 CN 202310601509
(71) Applicant: Jiangsu Nanomeida Optoelectronics Technology Co., Ltd., Suzhou, Jiangsu 215124 (CN)
(72) Inventor: LIU, Tengjiao, Beijing 100176 (CN); FAN, Jiangfeng, Suzhou, Jiangsu 215124 (CN); HU, Yuan, Beijing 100176 (CN); LI, Xin, Suzhou, Jiangsu 215124 (CN); SU, Yanping, Beijing 100176 (CN)
(74) Representative: Wang, Bo
(86) International application number: PCT/CN2024/094511
(87) International publication number: WO 2024/240154

(57) **Abstract**

The present disclosure relates to a conductive film, a touch assembly, and preparation methods thereof. The conductive film includes a base film and a conductive layer, and the conductive layer covers the base film. The conductive layer includes one or more conductive regions. At least one of the one or more conductive regions includes a conductive grid structure, and the conductive grid structure includes hollow grids and conductive grid lines. The touch component comprises the conductive film.

## Description

### CROSS-REFERENCE TO RELATED APPLICATIONS

This application claims priority to Chinese Patent Application No. 202310602223.4, filed on May 25, 2023, and Chinese Patent Application No. 202310601509.0, filed on May 25, 2023, the entire contents of each of which are hereby incorporated by reference.

### TECHNICAL FIELD

The present disclosure relates to the field of touch technology, and more particularly, relates to conductive films, touch assemblies, and preparation methods thereof.

### BACKGROUND

With the development of science and technology, touch interaction has become one of the important manners of human-computer interaction, and is widely applied to various fields, such as smart homes, smart appliances, medical care, self-service supermarkets, commercial advertising, smart logistics, intelligent payment, industrial control, vehicle displays, etc. Generally, a conductive film of a touch assembly (e.g., a touch screen) in a touch interaction device is required to have superior optical performance (e.g., high light transmittance and low haze). Furthermore, the touch assembly is typically fabricated from the conductive film. However, when existing conductive films are used for subsequent processing of touch patterns and lead wires of the touch assembly, the preparation of the touch assembly becomes relatively complicated. Therefore, it is desired to provide a conductive film having superior optical performance and a preparation method thereof, as well as a touch assembly having a simplified preparation process and a preparation method thereof.

### SUMMARY

One or more embodiments of the present disclosure provide a conductive film. The conductive film includes a base film and a conductive layer covering the base film. The conductive layer includes one or more conductive regions; at least one of the one or more conductive regions includes a conductive grid structure; and the conductive grid structure includes hollow grids and conductive grid lines.

In some embodiments, the one or more conductive regions include a plurality of conductive regions, and the plurality of conductive regions include a first conductive region and a second conductive region. The first conductive region includes the conductive grid structure, the second conductive region is disposed around the first conductive region and is connected to the conductive grid lines, and a sheet resistance of the first conductive region is larger than a sheet resistance of the second conductive region.

In some embodiments, the conductive layer has at least two first conductive regions, and the second conductive region is disposed between two adjacent first conductive regions among the at least two first conductive regions.

In some embodiments, the at least two first conductive regions are arranged in an array, and a shape of the first conductive region is a circle or a polygon.

In some embodiments, a minimum spacing between the two adjacent first conductive regions is within a range from 200 millimeters (mm) to 350 mm.

In some embodiments, a ratio of the sheet resistance of the first conductive region to the sheet resistance of the second conductive region is not less than 5; the sheet resistance of the first conductive region is within a range from 5 ohms per square (Ω/□) to 150 Ω/□, and the sheet resistance of the second conductive region is within a range from 0.1 Ω/□ to 50 Ω/□.

In some embodiments, a visible light transmittance of the base film and the first conductive region is larger than a visible light transmittance of the base film and the second conductive region; the visible light transmittance of the base film and the first conductive region is within a range from 80% to 92%, and the visible light transmittance of the base film and the second conductive region is within a range from 20% to 90%.

In some embodiments, the conductive grid structure is formed by performing yellow light etching on the conductive layer.

In some embodiments, the conductive layer includes a conductive nano layer, and the conductive nano layer includes at least one of a nano metal layer or a nano metal wire layer, the nano metal layer includes at least one of gold nanoparticle, silver nanoparticle, copper nanoparticle, platinum nanoparticle, palladium nanoparticle, aluminum nanoparticle, tin nanoparticle, lead nanoparticle, or titanium nanoparticle; and the nano metal wire layer includes at least one of silver nanowire, gold nanowire, copper nanowire, platinum nanowire, aluminum nanowire, titanium nanowire, or tin nanowire.

In some embodiments, the conductive layer includes a nano metal wire layer and a conductive protective layer, and the hollow grids are formed by etching the nano metal wire layer and the conductive protective layer through yellow light etching.

In some embodiments, a light transmittance of the base film and the conductive layer before the yellow light etching is within a range from 20% to 90%.

In some embodiments, a square resistance of the base film and the conductive layer before the yellow light etching is within a range from 0.1 Ω/□ to 50 Ω/□.

In some embodiments, a thickness of the conductive layer before the yellow light etching is within a range from 50 nanometers (nm) to 300 nm.

In some embodiments, a haze of the base film and the conductive layer before the yellow light etching is within a range from 1.0% to 30%.

In some embodiments, the conductive protective layer includes a polymer layer, and a thickness of the polymer layer is within a range from 0.5 nm to 10 nm.

In some embodiments, the conductive protective layer includes a metal oxide layer, and a thickness of the metal oxide layer is within a range from 10 nm to 50 nm.

In some embodiments, for each conductive region including the conductive grid structure, a ratio of a total area of the hollow grids to an area of the conductive region is larger than or equal to 60% and less than or equal to 97%.

In some embodiments, a width of the conductive grid lines is within a range from 3 microns (µm) to 30 µm.

In some embodiments, a maximum cycle of the conductive grid structure is not larger than 60% of a pixel array cycle of a display where the conductive film is applied.

In some embodiments, a material of the base film includes at least one of polyester, cycloolefin polymer, colorless polyimide, polypropylene, polyethylene, triacetate fiber, poly(ethylene terephthalate-co-1,4-cyclohexylenedimethylene terephthalate) (PETG), thermoplastic urethane (TPU), polyvinyl alcohol (PVA), or polycarbonate (PC).

In some embodiments, the conductive layer further includes colored particles, and a particle size of the colored particles is within a range from 0.05 µm to 1.0 µm.

In some embodiments, a light transmittance of the base film and the conductive region including the conductive grid structure is larger than or equal to 80%.

In some embodiments, a square resistance of the conductive region including the conductive grid structure is within a range from 5 Ω/□ to 150 Ω/□.

In some embodiments, a haze of the base film and the conductive region including the conductive grid structure is within a range from 0.8% to 4.0%.

In some embodiments, at least a portion of the conductive protective layer is located in net gaps formed by nano metal wires in the nano metal wire layer.

In some embodiments, at least a portion of the nano metal wire layer protrudes from the conductive protective layer.

In some embodiments, a thickness of the conductive protective layer is within a range from 30% to 110% of a thickness of the nano metal wire layer.

In some embodiments, a thickness of the conductive protective layer is within a range from 30% to 80% of a thickness of the nano metal wire layer.

In some embodiments, a thickness of the conductive protective layer is within a range from 50% to 80% of a thickness of the nano metal wire layer.

One or more embodiments of the present disclosure provide a preparation method of a conductive film. The preparation method includes preparing a conductive layer on a base film; and obtaining the conductive film by etching the conductive layer. The conductive layer includes one or more conductive regions; at least one of the one or more conductive regions includes a conductive grid structure; and the conductive grid structure includes hollow grids and conductive grid lines.

In some embodiments, the one or more conductive regions include a plurality of conductive regions, the plurality of conductive regions include a first conductive region having the conductive grid structure, and the etching the conductive layer includes: forming, through yellow light etching, the first conductive region including the conductive grid structure on the conductive layer.

In some embodiments, the conductive layer includes a nano metal wire layer and a conductive protective layer, and the hollow grids are formed by etching the nano metal wire layer and the conductive protective layer through yellow light etching.

One or more embodiments of the present disclosure provide a touch assembly. The touch assembly includes the conductive film above.

In some embodiments, the plurality of conductive regions include a first conductive region and a second conductive region, the first conductive region includes the conductive grid structure, the second conductive region is disposed around the first conductive region, and the second conductive region is connected to the conductive grid lines; and the touch assembly includes a touch pattern and lead wires, wherein the touch pattern is formed in the first conductive region; and the lead wires are formed in the second conductive region.

In some embodiments, a light transmittance of the touch assembly is larger than or equal to 80%.

In some embodiments, a haze of the touch assembly is within a range from 1.0% to 4.0%.

One or more embodiments of the present disclosure provide a method for preparing a touch assembly using the conductive film. The plurality of conductive regions include a first conductive region and a second conductive region, the first conductive region includes the conductive grid structure, the second conductive region is disposed around the first conductive region, and the second conductive region is connected to the conductive grid lines, and the method includes: preparing, through laser etching, a touch pattern of the touch assembly in the first conductive region; and preparing, through laser etching, lead wires of the touch assembly in the second conductive region.

### BRIEF DESCRIPTION OF THE DRAWINGS

The present disclosure is further illustrated in terms of exemplary embodiments. These exemplary embodiments are described in detail with reference to the drawings. These embodiments are not limiting, and in these embodiments, the same numerals denote the same structures, wherein:
FIG. 1A is a block diagram illustrating an exemplary conductive film according to some embodiments of the present disclosure;
FIG. 1B is a top view of an exemplary conductive film according to some embodiments of the present disclosure;
FIG. 1C is a top view of an exemplary conductive film according to other embodiments of the present disclosure;
FIG. 2 is a partial enlarged view of a region A in FIG. 1B and FIG. 1C;
FIG. 3 is a cross-sectional view of a conductive region including a conductive grid structure in FIG. 1B and FIG. 1C along a line B-B;
FIG. 4 is a cross-sectional view of a second conductive region in FIG. 1C along a line C-C;
FIG. 5 is a microscope photograph illustrating an exemplary conductive region including a conductive grid structure according to some embodiments of the present disclosure;
FIG. 6 is a microscope photograph illustrating an exemplary conductive region including a conductive grid structure according to other embodiments of the present disclosure; and
FIG. 7 is a microscope photograph illustrating an exemplary conductive region including a conductive grid structure according to other embodiments of the present disclosure.

In the drawings, 100 represents a conductive film, 110 represents a base film, 120 represents a conductive layer, 121 represents a first conductive region, 1210 represents a conductive grid structure, 1211 represents hollow grids, 1212 represents conductive grid lines, 122 represents a second conductive region, 123 represents a conductive nano layer, and 124 represents a conductive protective layer.

### DETAILED DESCRIPTION

To more clearly illustrate the technical solutions related to the embodiments of the present disclosure, a brief introduction of the drawings referred to the description of the embodiments is provided below. Obviously, the drawings described below are only some examples or embodiments of the present disclosure. Those having ordinary skills in the art, without further creative efforts, may apply the present disclosure to other similar scenarios according to these drawings. Unless obviously obtained from the context or the context illustrates otherwise, the same numeral in the drawings refers to the same structure or operation.

As shown in the present disclosure and claims, the words "one," "a," "a kind," and/or "the" are not especially singular but may include the plural unless the context expressly suggests otherwise. In general, the terms "comprise" and/or "include" merely prompt to include operations and elements that have been clearly identified, and these operations and elements do not constitute an exclusive listing. The methods or devices may also include other operations or elements.

One embodiment of the present disclosure provides a conductive film. The conductive film includes a base film and a conductive layer. The conductive layer covers the base film. The conductive layer includes one or more conductive regions. At least one of the one or more conductive region includes a conductive grid structure. The conductive grid structure includes a plurality of hollow grids and a plurality of conductive grid lines. In the present disclosure, the base film is configured to carry the conductive layer. By disposing the one or more conductive regions on the conductive layer, wherein the at least one of the one or more conductive regions includes the conductive grid structure, conductivity can be achieved through the conductive grid lines of the conductive grid structure. The hollow grids of the conductive grid structure can alleviate optical issues (e.g., whitening, yellowing, or hazing inherent in the conductive layer), thereby enabling the conductive film to have excellent optical performance (e.g., a high light transmittance and a low haze). The conductive film may be used to prepare a touch assembly. The touch assembly employing the conductive film also has excellent optical performance.

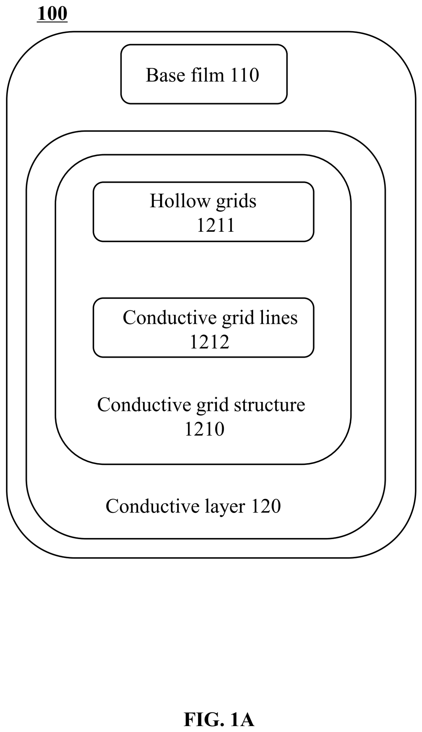

### {{FIGs. 1A-4}}

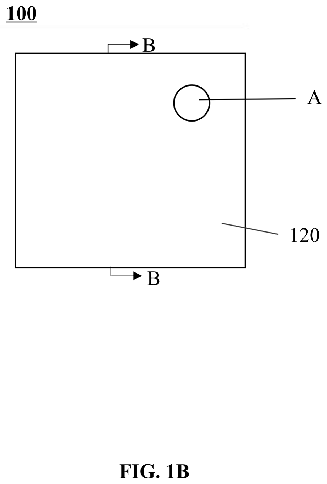

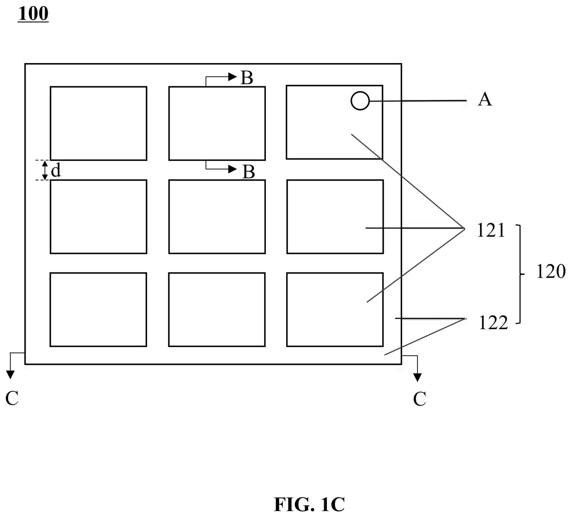

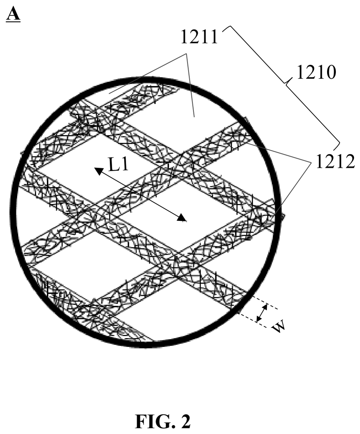

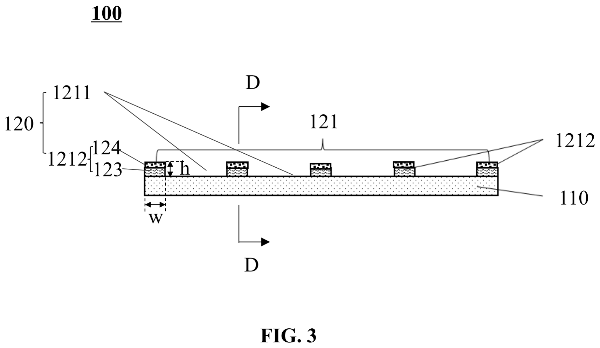

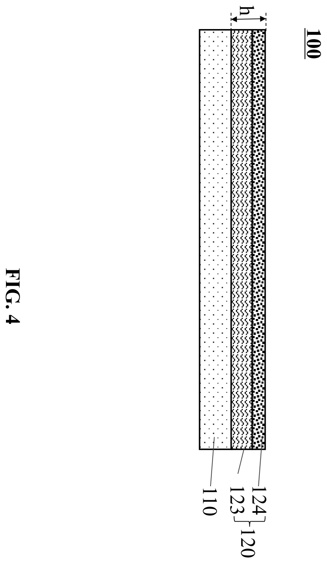

FIG. 1A is a block diagram illustrating an exemplary conductive film according to some embodiments of the present disclosure. FIG. 1B is a top view of an exemplary conductive film according to some embodiments of the present disclosure. FIG. 1C is a top view of an exemplary conductive film according to other embodiments of the present disclosure. FIG. 2 is a partial enlarged view of a region A in FIG. 1B and FIG. 1C. FIG. 3 is a cross-sectional view of a conductive region including a conductive grid structure in FIG. 1B and FIG. 1C along a line B-B. FIG. 4 is a cross-sectional view of a second conductive region in FIG. 1C along a line C-C.

As shown in FIG. 1A, a conductive film 100 may include a base film 110 and a conductive layer 120. As shown in FIG. 3 and FIG. 4, the conductive layer 120 covers the base film 110. The conductive layer 120 may include one or more conductive regions. In some embodiments, as shown in FIG. 1B, the conductive layer 120 may include one conductive region. The one conductive region substantially covers the entire base film. In some embodiments, as shown in FIG. 1C, the conductive layer 120 may include at least two conductive regions. When the conductive layer 120 includes a plurality of conductive regions (which may be understood as the at least two conductive regions), the plurality of conductive regions may be configured to include a first conductive region 121 and a second conductive region 122. As shown in FIG. 1C, the conductive layer 120 includes the first conductive region 121 and the second conductive region 122. In some embodiments, the conductive layer 120 may further include at least one other conductive region (e.g., a third conductive region) with performance different from at least one of the first conductive region 121 or the second conductive region 122. For example, the conductive layer 120 may include the first conductive region 121, the second conductive region 122, and the third conductive region. For example, the conductive layer 120 may include the first conductive region 121 and the third conductive region. The present disclosure does not impose any limitations on the combination of the number, performance, etc., of the plurality of conductive regions.

As shown in FIG. 1A, at least one of the one or more conductive regions (also referred to as at least one conductive region) includes a conductive grid structure 1210. The conductive grid structure 1210 may include a plurality of hollow grids 1211 and a plurality of conductive grid lines 1212. In some embodiments of the present disclosure, the first conductive region 121 is configured to include the conductive grid structure, or the first conductive region 121 is a conductive region including the conductive grid structure. As shown in FIG. 1B, the conductive region including the conductive grid structure substantially covers the entire base film. It may be understood that the entire conductive film shown in FIG. 1B substantially includes the conductive region including the conductive grid structure, which may also be referred to as the first conductive region, or understood as the first conductive region 121 in FIG. 1C.

As shown in FIG. 1C, the second conductive region 122 is disposed around the first conductive region 121. The second conductive region 122 is connected to the conductive grid lines 1212 of the first conductive region 121 to achieve transmission of signals (e.g., electrical signals). A sheet resistance of the first conductive region 121 is larger than a sheet resistance of the second conductive region 122. The first conductive region 121 is configured to form a touch pattern on a touch electrode. The second conductive region 122 is configured to form lead wires on the touch electrode. The sheet resistance of the second conductive region 122 is smaller than the sheet resistance of the first conductive region 121, which can ensure that conductivity performance of the second conductive region 122 is better than conductivity performance of the first conductive region 121, thereby achieving the signal transmission. However, since the conductive grid structure is formed by performing yellow light etching on the conductive layer 120, the first conductive region 121 has the relatively large sheet resistance, while a light transmittance of the first conductive region 121 increases, allowing the touch electrode to obtain a better optical transmittance and appearance when the touch pattern is formed. It should be noted that the first conductive region 121 is a region of the conductive layer 120 on which the yellow light etching is performed, while the second conductive region 122 is a region of the conductive layer 120 on which the yellow light etching is not performed. More descriptions regarding the yellow light etching may be found elsewhere in the present disclosure, which is not repeated herein.

The conductive layer 120 covering the base film 110 may be understood as the conductive layer 120 covering a surface of one side of the base film 110. For example, the conductive layer 120 may cover a top of the base film 110. In the present disclosure, the top refers to a side of the touch electrode facing the outside when the conductive film 100 is used for the touch electrode.

In some embodiments, a material of the base film 110 may include polyester, cycloolefin polymer (COP), colorless polyimide (CPI), polypropylene (PP), polyethylene (PE), triacetate fiber (TCA), poly(ethylene terephthalate-co-1,4-cyclohexylenedimethylene terephthalate) (PETG), thermoplastic urethane (TPU), polyvinyl alcohol (PVA), polycarbonate (PC), or the like, or any combination thereof.

In some embodiments, the polyester may include, but is not limited to, polyethylene terephthalate (PET).

In some embodiments, the base film 110 may include a processed base film. In some embodiments, the processing of the processed base film may include a transmission increase operation, an anti-reflection operation, a hardening operation, an anti-glare operation, or the like, or any combination thereof. In some embodiments, at least one of the transmission increase operation, the anti-reflection operation, the hardening operation, or the anti-glare operation may be achieved by coating.

In some embodiments, the transmission increase operation may increase the light transmittance of the base film.

In some embodiments, the anti-reflective operation may reduce the light reflection of the base film to further increase the light transmittance of the base film.

In some embodiments, the hardening operation may increase the hardness of the base film. For example, the hardening operation may increase a surface hardness of the base film to exceed 3H.

In some embodiments, the anti-glare operation may alter a surface of a film material to a matte diffuse reflection surface, thereby reducing interference of external light on human eyes.

In some embodiments, a thickness of the base film may be within a range from 13 µm to 300 µm. In some embodiments, the thickness of the base film may be within a range from 30 µm to 280 µm. In some embodiments, the thickness of the base film may be within a range from 50 µm to 250 µm. In some embodiments, the thickness of the base film may be within a range from 70 µm to 230 µm. In some embodiments, the thickness of the base film may be within a range from 90 µm to 200 µm. In some embodiments, the thickness of the base film may be within a range from 110 µm to 180 µm. In some embodiments, the thickness of the base film may be within a range from 130 µm to 150 µm. In some embodiments, the thickness of the base film may be 20 µm, 40 µm, 60 µm, 80 µm, 100 µm, 120 µm, 140 µm, 160 µm, 180 µm, 200 µm, 220 µm, 240 µm, 260 µm, 280 µm, 300 µm, etc.

More descriptions regarding the first conductive region 121, the conductive layer 120, and the conductive grid structure 1210 may be found in the following and elsewhere (e.g., FIGs. 2-7 and descriptions thereof) of the present disclosure.

In some embodiments, as shown in FIG. 1C, the conductive layer 120 may have at least two first conductive regions 121. For example, a count of the at least two first conductive regions 121 may be 2, 3, 4, 6, 9, etc. In some embodiments, a shape of the first conductive region 121 may be a regular shape, such as a circle, a polygon (e.g., a triangle, a square, a rectangle, a diamond, a hexagon, or an octagon), etc. In some embodiments, the shapes of the at least two first conductive regions 121 may be the same or different. In some embodiments, the at least two first conductive regions 121 may be arranged in an array to improve the utilization of the conductive film 100. In some embodiments, the array may include a rectangular array (also referred to as a "matrix"), a circular array, or the like, or any combination thereof. In some embodiments, the matrix may be represented as m (rows) * n (columns), wherein m and n are integers lager than or equal to 1. For example, four first conductive regions 121 may be arranged in a 1*4 matrix or a 2*2 matrix. As another example, eight first conductive regions 121 may be arranged in a 1*8 matrix, a 2*4 matrix, a 4*2 matrix, or an 8*1 matrix. As still another example, as shown in FIG. 1C, nine first conductive regions 121 may be arranged in a 3*3 matrix. In some embodiments, the at least two first conductive regions 121 may also be arranged irregularly.

In some embodiments, a size of the first conductive region 121 may be within a range from 1 inch to 21.5 inches. In some embodiments, the size of the first conductive region 121 may be within a range from 2 inches to 21 inches. In some embodiments, the size of the first conductive region 121 may be within a range from 3 inches to 20 inches. In some embodiments, the size of the first conductive region 121 may be within a range from 4 inches to 19 inches. In some embodiments, the size of the first conductive region 121 may be within a range from 5 inches to 18 inches. In some embodiments, the size of the first conductive region 121 may be within a range from 6 inches to 17 inches. In some embodiments, the size of the first conductive region 121 may be within a range from 7 inches to 16 inches. In some embodiments, the size of the first conductive region 121 may be within a range from 8 inches to 15 inches. In some embodiments, the size of the first conductive region 121 may be within a range from 9 inches to 14 inches. In some embodiments, the size of the first conductive region 121 may be within a range from 10 inches to 13 inches. In some embodiments, the size of the first conductive region 121 may be within a range from 11 inches to 12 inches. In some embodiments, the size of the first conductive region 121 may be 1 inch, 3.5 inches, 5 inches, 5.5 inches, 8.9 inches, 10.1 inches, 13.4 inches, 14 inches, 15.6 inches, 17 inches, 21.5 inches, etc.

In some embodiments, performance of the at least two first conductive regions 121 may be the same or different. In some embodiments, the performance may include a size, a sheet resistance, a visible light transmittance, a haze, or the like, or any combination thereof.

In some embodiments, the conductive region including the conductive grid structure (e.g., the conductive film 120 shown in FIG. 1B or the first conductive region 121 shown in FIG. 1C) may be formed by performing the yellow light etching on the conductive layer 120 to form the conductive grid structure. It is understood that the conductive grid structure is formed by performing the yellow light etching on the conductive layer 120. In some embodiments, the yellow light etching may include at least one of oxidation corrosion or acid corrosion. For example, the yellow light etching may include the oxidation corrosion and the acid corrosion. In some embodiments, an etching solution may include a hydrochloric acid-nitric acid system etching solution, a ferric chloride system etching solution, a ferric nitrate system etching solution, a ferric nitrate-nitric acid system etching solution, a phosphoric acid-nitric acid-acetic acid system etching solution, or the like, or any combination thereof.

The hydrochloric acid-nitric acid system etching solution includes 35 wt%-50 wt% of hydrochloric acid, 5 wt%-15 wt% of nitric acid, and 1 wt%-10 wt% of an additive, with the balance being deionized water. The additive includes an anti-side corrosion agent, a smoke suppressant, a surfactant, a defoamer, or the like, or any combination thereof.

The ferric chloride system etching solution includes 28 wt%-45 wt% of ferric chloride, 5 wt%-20 wt% of hydrochloric acid, 0.05 wt%-5 wt% of chloride, 0.01 wt%-0.1 wt% of a surfactant, and 0.5 wt%-3 wt% of an anti-side corrosion agent, with the balance being deionized water.

The ferric nitrate system etching solution includes 20 wt%-70 wt% of ferric nitrate nonahydrate, 5 wt%-15 wt% of nitric acid, and 1 wt%-10 wt% of an additive, with the balance being deionized water. The additive includes the anti-side corrosion agent, the smoke suppressant, the surfactant, the defoamer, or the like, or any combination thereof.

The phosphoric acid-nitric acid-acetic acid system etching solution includes 2 wt%-10 wt% of nitric acid, 50 wt%-80 wt% of phosphoric acid, 15 wt%-30 wt% of acetic acid, and 2.5 wt%-7 wt% of an additive, with the balance being deionized water. The additive includes the anti-side corrosion agent, the surfactant, the defoamer, or the like, or any combination thereof.

In some embodiments, the anti-side corrosion agent may include a hydroxyphosphate corrosion inhibitor. In some embodiments, the smoke suppressant, the surfactant, and the defoamer may be common additives in the art, which are not described herein. Mass fractions of the hydrochloric acid, the nitric acid, and the phosphoric acid in the above etching solutions are 36 wt%, 68 wt%, and 85 wt%, respectively.

The region of the conductive layer 120 on which the yellow light etching is not performed is the second conductive region 122. In some embodiments, as shown in FIG. 1C, the second conductive region 122 may be disposed around the first conductive region 121, thereby facilitating the preparation of the touch pattern of the touch electrode on the first conductive region 121 and the preparation of the lead wires of the touch electrode on the second conductive region 122 to form the touch electrode. In some embodiments, the second conductive region 122 may be disposed between two adjacent first conductive regions 121 among the at least two first conductive regions, thereby facilitating the preparation of each first conductive region 121 and the corresponding second conductive region 122 disposed around the first conductive region 121 on the conductive film 100 as one touch electrode.

In some embodiments, any two first conductive regions 121 do not intersect, and there is a spacing between the two adjacent first conductive regions 121. In some embodiments, a minimum spacing (donated by "d" as shown in FIG. 1C) between the two adjacent first conductive regions 121 may be understood as a smallest separation distance between the two adjacent first conductive regions 121. The spacing between the two adjacent first conductive regions 121 affects the utilization of the conductive film 100 and subsequent preparation of the touch electrode. For example, if the spacing between the two adjacent first conductive regions 121 is too small, it can lead difficulties in the preparation of the lead wires of the touch electrode. It may even make it impossible to prepare two lead wires within such spacing, which results in the inability to prepare two touch electrodes and a low utilization of the conductive film 100. As another example, if the spacing between the two adjacent first conductive regions 121 is too large, it causes wastage and also results in the low utilization of the conductive film 100.

In some embodiments, to improve the utilization of the conductive film 100 and facilitate the subsequent preparation of the touch electrode (or the lead wires), a minimum spacing between the two adjacent first conductive regions 121 is within a range from 200 mm to 350 mm. In some embodiments, the minimum spacing between the two adjacent first conductive regions 121 may be within a range from 220 mm to 330 mm. In some embodiments, the minimum spacing between the two adjacent first conductive regions 121 may be within a range from 240 mm to 310 mm. In some embodiments, the minimum spacing between the two adjacent first conductive regions 121 may be within a range from 260 mm to 290 mm. In some embodiments, the minimum spacing between the two adjacent first conductive regions 121 may be within a range from 200 mm to 330 mm. In some embodiments, the minimum spacing between the two adjacent first conductive regions 121 may be within a range from 200 mm to 300 mm. In some embodiments, the minimum spacing between the two adjacent first conductive regions 121 may be within a range from 200 mm to 250 mm.

In some embodiments, a ratio of the sheet resistance of the first conductive region 121 to the sheet resistance of the second conductive region 122 may be not less than 5. In some embodiments, the ratio of the sheet resistance of the first conductive region 121 to the sheet resistance of the second conductive region 122 may be not less than 10. In some embodiments, the ratio of the sheet resistance of the first conductive region 121 to the sheet resistance of the second conductive region 122 may be not less than 15. In some embodiments, the ratio of the sheet resistance of the first conductive region 121 to the sheet resistance of the second conductive region 122 may be not less than 20. In some embodiments, the ratio of the sheet resistance of the first conductive region 121 to the sheet resistance of the second conductive region 122 may be not less than 25. In some embodiments, the ratio of the sheet resistance of the first conductive region 121 to the sheet resistance of the second conductive region 122 may be not less than 30. In some embodiments, the ratio of the sheet resistance of the first conductive region 121 to the sheet resistance of the second conductive region 122 may be not less than 35. In some embodiments, the ratio of the sheet resistance of the first conductive region 121 to the sheet resistance of the second conductive region 122 may be not less than 40. In some embodiments, the ratio of the sheet resistance of the first conductive region 121 to the sheet resistance of the second conductive region 122 may be not less than 45. In some embodiments, the ratio of the sheet resistance of the first conductive region 121 to the sheet resistance of the second conductive region 122 may be not less than 50.

In some embodiments, the sheet resistance of the first conductive region 121 (or the conductive region including the conductive grid structure) may be within a range from 5 Ω/□ to 150 Ω/□. In some embodiments, the sheet resistance of the first conductive region 121 may be within a range from 10 Ω/□ to 140 Q/o. In some embodiments, the sheet resistance of the first conductive region 121 may be within a range from 15 Ω/□ to 130 Ω/□. In some embodiments, the sheet resistance of the first conductive region 121 may be within a range from 20 Ω/□ to 120 Ω/□. In some embodiments, the sheet resistance of the first conductive region 121 may be within a range from 25 Ω/□ to 110 Ω/□. In some embodiments, the sheet resistance of the first conductive region 121 may be within a range from 30 Ω/□ to 100 Ω/□. In some embodiments, the sheet resistance of the first conductive region 121 may be within a range from 35 Ω/□ to 90 Ω/□. In some embodiments, the sheet resistance of the first conductive region 121 may be within a range from 40 Ω/□ to 80 Ω/□. In some embodiments, the sheet resistance of the first conductive region 121 may be within a range from 45 Ω/□ to 70 Q/o. In some embodiments, the sheet resistance of the first conductive region 121 may be within a range from 50 Ω/□ to 60 Ω/□. In some embodiments, the sheet resistance of the first conductive region 121 may be 5 Q/o, 20 Ω/□, 50 Ω/□, 80 Ω/□, 100 Ω/□, 120 Ω/□, 150 Ω/□, etc.

In some embodiments, the sheet resistance of the second conductive region 122 may be within a range from 0.1 Ω/□ to 50 Ω/□. In some embodiments, the sheet resistance of the second conductive region 122 may be within a range from 0.1 Ω/□ to 40 Ω/□. In some embodiments, the sheet resistance of the second conductive region 122 may be within a range from 0.1 Ω/□ to 30 Ω/□. In some embodiments, the sheet resistance of the second conductive region 122 may be within a range from 0.1 Ω/□ to 20 Ω/□. In some embodiments, the sheet resistance of the second conductive region 122 may be within a range from 0.1 Ω/□ to 10 Ω/□. In some embodiments, the sheet resistance of the second conductive region 122 may be within a range from 0.5 Ω/□ to 9 Ω/□. In some embodiments, the sheet resistance of the second conductive region 122 may be within a range from 1 Ω/□ to 8 Ω/□. In some embodiments, the sheet resistance of the second conductive region 122 may be within a range from 1.5 Ω/□ to 7 Q/o. In some embodiments, the sheet resistance of the second conductive region 122 may be within a range from 2 Ω/□ to 6 Ω/□. In some embodiments, the sheet resistance of the second conductive region 122 may be within a range from 2.5 Ω/□ to 5 Q/o. In some embodiments, the sheet resistance of the second conductive region 122 may be within a range from 3 Ω/□ to 4 Ω/□. In some embodiments, the sheet resistance of the second conductive region 122 may be 0.1 Ω/□, 1 Ω/□, 2 Ω/□, 5 Ω/□, 8 Ω/□, 10 Ω/□, etc.

By setting the ratio of the sheet resistance of the first conductive region 121 to the sheet resistance of the second conductive region 122 to be not less than 5, the conductivity performance of the second conductive region 122 can be significantly better than the conductivity performance of the first conductive region 121, and the second conductive region 122 can be used to form the lead wires in the subsequent process. The sheet resistance of the first conductive region 121 is set within the range from 5 Ω/□ to 150 Ω/□, and the sheet resistance of the second conductive region 122 is set within the range from 0.1 Ω/□ to 50 Ω/□. For the touch electrode, under a condition of meeting the signal transmission requirements of the touch pattern, a higher light transmittance and lower haze in a touch pattern region are preferable. In contrast, a lead wire region of the touch electrode has no requirements on optical performance, but demands the higher conductivity performance. Therefore, while ensuring the signal transmission of the touch pattern, the hollow grids can be as much as possible to improve the optical performance of the first conductive region 121. It should be noted that the base film has substantially no effect on the performance test of the sheet resistance of the conductive layer. A sheet resistance of the base film and the first conductive region as a whole is approximately equal to the sheet resistance of the first conductive region. A sheet resistance of the base film and the second conductive region as a whole is approximately equal to the sheet resistance of the second conductive region.

In some embodiments, a visible light transmittance of the base film and the first conductive region 121 is larger than a visible light transmittance of the base film and the second conductive region 122. The yellow light etching can increase the visible light transmittance of the first conductive region 121. By setting the visible light transmittance of the first conductive region 121 to be relatively large, a function of the touch pattern subsequently formed by the first conductive region 121 can be ensured. The visible light transmittance of the second conductive region 122 without the yellow light etching is relatively small, which means that a conductivity of the conductive layer 120 is not affected, and the second conductive region 122 with a good conductivity can be ensured. It should be noted that the base film influences testing of the visible light transmittance and the haze of the conductive layer. For example, the visible light transmittance of the first conductive region refers to a visible light transmittance of the base film and the first conductive region as a whole. The visible light transmittance of the second conductive region refers to a visible light transmittance of the base film and the second conductive region as a whole.

In some embodiments, the visible light transmittance of the base film and the first conductive region 121 (or the conductive region including the conductive grid structure) may be within a range from 80% to 92%. In some embodiments, the visible light transmittance of the base film and the first conductive region 121 may be within a range from 80% to 90%. In some embodiments, the visible light transmittance of the base film and the first conductive region 121 may be within a range from 83% to 88%. In some embodiments, the visible light transmittance of the base film and the first conductive region 121 may be within a range from 84% to 86%. In some embodiments, the visible light transmittance of the base film and the first conductive region 121 may be 80%, 85%, 90%, or 92%.

In some embodiments, the visible light transmittance of the base film and the second conductive region 122 may be within a range from 20% to 90%. In some embodiments, the visible light transmittance of the base film and the second conductive region 122 may be within a range from 20% to 85%. In some embodiments, the visible light transmittance of the base film and the second conductive region 122 may be within a range from 30% to 80%. In some embodiments, the visible light transmittance of the base film and the second conductive region 122 may be within a range from 40% to 75%. In some embodiments, the visible light transmittance of the base film and the second conductive region 122 may be within a range from 50% to 70%. In some embodiments, the visible light transmittance of the base film and the second conductive region 122 may be within a range from 60% to 65%. In some embodiments, the visible light transmittance of the base film and the second conductive region 122 may be 20%, 30%, 40%, 50%, 60%, 70%, or 80%.

By setting the visible light transmittance of the base film and the first conductive region 121 within the range from 80% to 92%, and the visible light transmittance of the base film and the second conductive region 122 within the range from 20% to 90%, the visible light transmittance of the base film and the first conductive region 121 can ensure the basic requirements of the touch electrode for the light transmittance. Meanwhile, the second conductive region 122 used for conduction can also transmit the visible light, so that the conductive grid lines 1212 inside the first conductive region 121 obtained by hollowing out the second conductive region 122 can also transmit the visible light. Therefore, appearance issues of moire patterns or scattered points that occur in later specific applications of traditional solid (non-transparent) conductive grid lines can be avoided, and the light transmittance of the base film and the first conductive region 121 can be increased, thereby improving the optical performance.

As shown in FIG. 2 and FIG. 3, the hollow grids 1211 are formed by etching the conductive layer 120 through the yellow light etching. The conductive layer 120 on which the yellow light etching has not performed is the conductive grid line 1212.

For each conductive region including the conductive grid structure (e.g., the conductive film 120 as shown in FIG. 1B or the first conductive region 121 as shown in FIG. 1C), a ratio S of a total area of the plurality of hollow grids 1211 to an area of the conductive region (e.g., the conductive film 120 as shown in FIG. 1B or the first conductive region 121 as shown in FIG. 1C) affects the conductivity and the optical performance of the conductive region (e.g., the conductive film 120 as shown in FIG. 1B or the first conductive region 121 as shown in FIG. 1C). For example, for each conductive region including the conductive grid structure, if the ratio S of the total area of the plurality of hollow grids 1211 to the area of the conductive region is too small, it results in poor optical performance (e.g., lower transmittance, higher haze) of the conductive region (e.g., the first conductive region 121). As another example, for each conductive region including the conductive grid structure, if the ratio S of the total area of the plurality of hollow grids 1211 to the area of the conductive region is too large, it results in poor conductivity of the conductive region (e.g., the first conductive region 121). Therefore, in some embodiments, to improve the optical performance and conductivity of each conductive region (e.g., the first conductive region 121) including the conductive grid structure, the ratio S of the total area of the plurality of hollow grids 1211 to the area of the conductive region (e.g., the first conductive region 121) needs to satisfy a preset requirement.

In some embodiments, for each conductive region including the conductive grid structure, the ratio S of the total area of the plurality of hollow grids 1211 to the area of the conductive region may be larger than or equal to 60% and less than or equal to 97%. In some embodiments, for each conductive region including the conductive grid structure, the ratio S of the total area of the plurality of hollow grids 1211 to the area of the conductive region may be larger than or equal to 65% and less than or equal to 95%. In some embodiments, for each conductive region including the conductive grid structure, the ratio S of the total area of the plurality of hollow grids 1211 to the area of the conductive region may be larger than or equal to 70% and less than or equal to 90%. In some embodiments, for each conductive region including the conductive grid structure, the ratio S of the total area of the plurality of hollow grids 1211 to the area of the conductive region may be larger than or equal to 75% and less than or equal to 85%. In some embodiments, for each conductive region including the conductive grid structure, the ratio S of the total area of the plurality of hollow grids 1211 to the area of the conductive region may be larger than or equal to 80% and less than or equal to 85%. In some embodiments, for each conductive region including the conductive grid structure, the ratio S of the total area of the plurality of hollow grids 1211 to the area of the conductive region may be larger than or equal to 60% and less than or equal to 95%. In some embodiments, for each conductive region including the conductive grid structure, the ratio S of the total area of the plurality of hollow grids 1211 to the area of the conductive region may be larger than or equal to 60% and less than or equal to 90%. In some embodiments, for each conductive region including the conductive grid structure, the ratio S of the total area of the plurality of hollow grids 1211 to the area of the conductive region may be larger than or equal to 60% and less than or equal to 85%. In some embodiments, for each conductive region including the conductive grid structure, the ratio S of the total area of the plurality of hollow grids 1211 to the area of the conductive region may be larger than or equal to 60% and less than or equal to 80%. In some embodiments, for each conductive region including the conductive grid structure, the ratio S of the total area of the plurality of hollow grids 1211 to the area of the conductive region may be larger than or equal to 60% and less than or equal to 75%. In some embodiments, for each conductive region including the conductive grid structure, the ratio S of the total area of the plurality of hollow grids 1211 to the area of the conductive region may be larger than or equal to 60% and less than or equal to 70%. In some embodiments, for each conductive region including the conductive grid structure, the ratio S of the total area of the plurality of hollow grids 1211 to the area of the conductive region may be larger than or equal to 65% and less than or equal to 97%. In some embodiments, for each conductive region including the conductive grid structure, the ratio S of the total area of the plurality of hollow grids 1211 to the area of the conductive region may be larger than or equal to 70% and less than or equal to 97%. In some embodiments, for each conductive region including the conductive grid structure, the ratio S of the total area of the plurality of hollow grids 1211 to the area of the conductive region may be larger than or equal to 75% and less than or equal to 97%. In some embodiments, for each conductive region including the conductive grid structure, the ratio S of the total area of the plurality of hollow grids 1211 to the area of the conductive region may be larger than or equal to 80% and less than or equal to 97%. In some embodiments, for each conductive region including the conductive grid structure, the ratio S of the total area of the plurality of hollow grids 1211 to the area of the conductive region may be larger than or equal to 85% and less than or equal to 97%. In some embodiments, for each conductive region including the conductive grid structure, the ratio S of the total area of the plurality of hollow grids 1211 to the area of the conductive region may be larger than or equal to 90% and less than or equal to 97%.

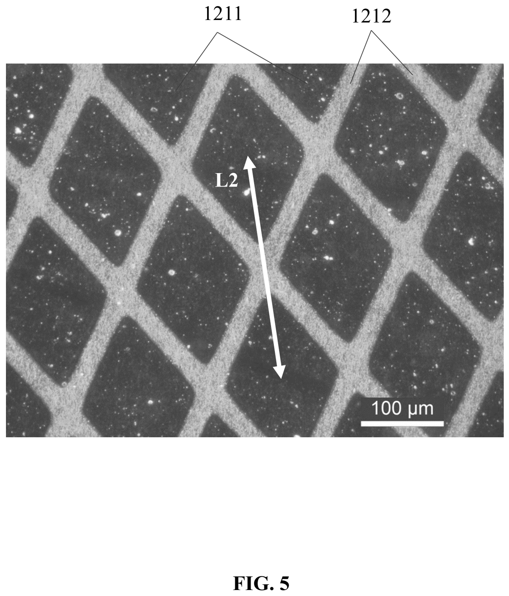

### {{FIGs. 5-7}}

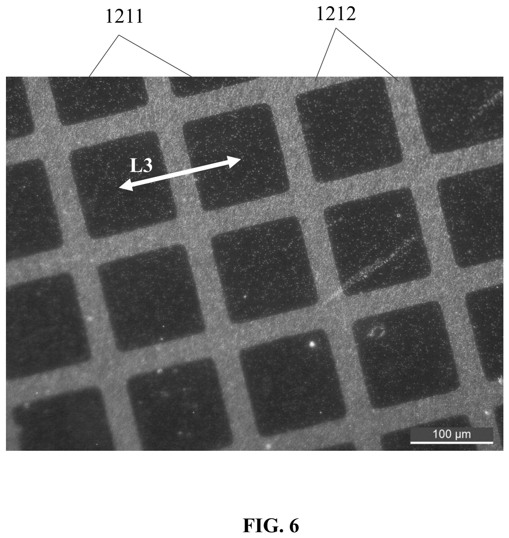

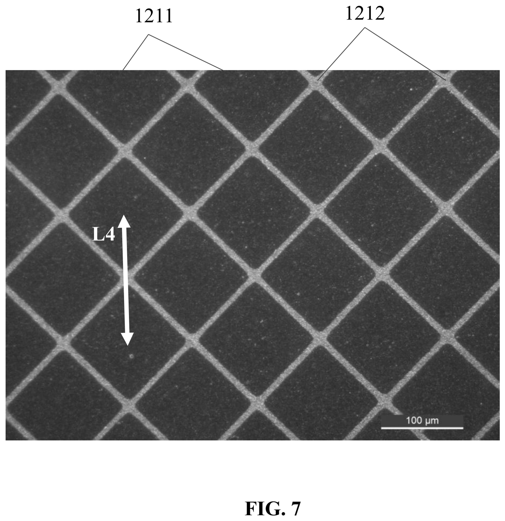

FIG. 5 is a microscope photograph illustrating an exemplary conductive region including a conductive grid structure according to some embodiments of the present disclosure. FIG. 6 is a microscope photograph illustrating an exemplary conductive region including a conductive grid structure according to other embodiments of the present disclosure. FIG. 7 is a microscope photograph illustrating an exemplary conductive region including a conductive grid structure according to other embodiments of the present disclosure. FIG. 5, FIG. 6, and FIG. 7 may also be understood as microscope images of the conductive film 100 as shown in FIG. 1B or the first conductive region 121 as shown in FIG. 1C. It may be understood that, as shown in FIG. 5, FIG. 6, and FIG. 7, for each conductive region including the conductive grid structure, a sum of the total area of the plurality of hollow grids 1211 and a total area of the conductive grid lines 1212 equals an area of the conductive region.

The conductive grid lines 1212 may be used to construct an ultra-fine sensing circuit channel for a touch pattern electrode. In some embodiments, the conductive grid lines 1212 may be continuous nano metal wires. In some embodiments, without affecting the conductive path of the conductive layer 120, the conductive grid lines 1212 include a plurality of nano metal wires that are randomly distributed and connected to each other. It may be understood that the conductive grid lines 1212 may be a conductive channel formed by the plurality of nano metal wires connected to each other. In some embodiments, the conductive grid lines 1212 may be in a shape of straight lines, curves, wavy lines, etc. In some embodiments, a shape of a grid formed by the conductive grid lines 1212 (also be referred to as a shape of the hollow grids 1211) may be a polygon, such as a triangle, a rhombus (as shown in FIG. 2 or FIG. 5), a square (as shown in FIG. 6 or FIG. 7), a rectangle, etc. In other embodiments, the shape of the grid formed by the conductive grid lines 1212 (also be referred to as the shape of the hollow grids 1211) may be an ellipse, a circle, or an irregular shape. In some embodiments, the grid formed by the conductive grid lines 1212 (also be referred to as the hollow grids 1211) may be arranged in an array. In some embodiments, the conductive grid lines 1212 may form the grids with one or more types of shapes. For example, the conductive grid lines 1212 may form the grids with any combination of the circle and the polygon.

In some embodiments, a width (denoted as "w" in FIG. 2 and FIG. 3) of the conductive grid lines 1212 may be within a range from 3 µm to 30 µm. In some embodiments, the width of the conductive grid lines 1212 may be within a range from 5 µm to 28 µm. In some embodiments, the width of the conductive grid lines 1212 may be within a range from 8 µm to 27 µm. In some embodiments, the width of the conductive grid lines 1212 may be within a range from 10 µm to 25 µm. In some embodiments, the width of the conductive grid lines 1212 may be within a range from 12 µm to 23 µm. In some embodiments, the width of the conductive grid lines 1212 may be within a range from 15 µm to 20 µm. In some embodiments, the width of the conductive grid lines 1212 may be 3 µm, 5 µm, 10 µm, 15 µm, 20 µm, 25 µm, or 30 µm. Since the visible light can also transmit through the conductive grid lines 1212 (e.g., a light transmittance of the conductive grid lines 1212 is within a range from 20% to 90%), when the width of the conductive grid lines 1212 is within the range from 3 µm to 30 µm, the conductive grid lines 1212 can construct the ultra-fine sensing circuit channel of the touch pattern electrode, and reduce a difficulty of the yellow light etching, thereby improving the efficiency of the yellow light etching. In the present disclosure, the light transmittance refers to a visible light transmittance.

It may be understood that a structure of the second conductive region 122 is the same as a structure of a conductive layer (i.e., the conductive grid line 1212) in the first conductive region 121 on which the yellow light etching is not performed. Accordingly, the performance of the second conductive region 122 (e.g., the light transmittance, the haze, the square resistance, etc.) are the same as performance of the conductive layer in the first conductive region 121 on which the yellow light etching is not performed. FIG. 4 may also be understood as a sectional view of the conductive grid line in FIG. 3 along a line D-D.

A maximum cycle of the conductive grid structure refers to a maximum distance between geometric center points of adjacent hollow grids. As shown in FIG. 2, "L1" denotes the maximum cycle of the conductive grid structure as shown in FIG. 2. As shown in FIGs. 5-7, "L2," "L3," and "L4" denote maximum cycles of the conductive grid structures as shown in FIGs. 5-7, respectively. In some embodiments, the maximum cycle of the conductive grid structure is not larger than 60% of a pixel array cycle of a display where the conductive film is applied. For example, the maximum cycle of the conductive grid structure may be 60%, 55%, 50%, 45%, 40%, 35%, 30%, 25%, 20%, 15%, 10%, etc., of the pixel array cycle of the display where the conductive film is applied.

A 15.6-inch in-plane switching (IPS) display with a resolution of 1920×1080 is taken as an example for illustration. A size of an effective display area of the 15.6-inch IPS display is 34.5 centimeters (cm)×19.5 cm. A pixel array cycle of the IPS display is determined to be about 180 µm×180 µm. A maximum cycle of the conductive grid structure on the conductive film is not larger than 108 µm (180 µm×60%). This configuration can further improve the optical appearance of the display after the touch assembly using the conductive film is attached to the display. Specifically, the touch display has a uniform optical effect and/or invisible etching traces when the screen is off, and has no scattered points and/or moire patterns when the screen is on.

In some embodiments, the conductive layer 120 may include a conductive nano layer 123. In some embodiments, the conductive layer 120 may further include a conductive protective layer 124. It may be understood that the conductive layer on which the yellow light etching is not performed (e.g., the conductive grid line 1212 as shown in FIG. 2 and FIG. 3 or the conductive layer 120 as shown in FIG. 4) may include the conductive nano layer 123 and the conductive protective layer 124. The hollow grids 1211 may be understood as being formed by etching the conductive nano layer 123 and the conductive protective layer 124 through the yellow light etching, or the hollow grids 1211 substantially does not include the conductive nano layer 123 and the conductive protective layer 124.

In some embodiments, as shown in FIG. 3 and FIG. 4, the conductive nano layer 123 may be located below the conductive protective layer 124. In some embodiments, the conductive nano layer 123 and the conductive protective layer 124 may be mixed (which may also be understood as not being layered) to form the conductive layer 120 on which the yellow light etching is not performed.

In some embodiments, the conductive nano layer 123 may include at least one of a nano metal layer or a nano metal wire layer. In some embodiments, when the conductive nano layer 123 includes the nano metal layer and the nano metal wire layer, the nano metal layer may be located above or below the nano metal wire layer. In some embodiments, a thickness of the conductive nano layer 123 may be within a range from 100 nm to 500 nm. In some embodiments, the thickness of the conductive nano layer 123 may be within a range from 150 nm to 450 nm. In some embodiments, the thickness of the conductive nano layer 123 may be within a range from 200 nm to 400 nm. In some embodiments, the thickness of the conductive nano layer 123 may be within a range from 250 nm to 350 nm.

In some embodiments, the nano metal layer may include at least one of gold nanoparticle, silver nanoparticle, copper nanoparticle, platinum nanoparticle, palladium nanoparticle, aluminum nanoparticle, tin nanoparticle, lead nanoparticle, or titanium nanoparticle. In some embodiments, the nano metal layer may include a film layer structure prepared by magnetron sputtering of nano metal (e.g., at least one of the gold nanoparticle, the silver nanoparticle, the copper nanoparticle, the platinum nanoparticle, the palladium nanoparticle, the aluminum nanoparticle, the tin nanoparticle, the lead nanoparticle, or the titanium nanoparticle). The nano metal or an alloy thereof has an absorption effect on light of a specific band. Therefore, the nano metal layer can not only adjust a chromaticity of the conductive nano layer 123, but also increase the conductivity of the prepared conductive film 100. In some embodiments, a thickness of the nano metal layer may be within a range from 3 nm to 10 nm. In some embodiments, the thickness of the nano metal layer may be within a range from 4 nm to 9 nm. In some embodiments, the thickness of the nano metal layer may be within a range from 5 nm to 8 nm. In some embodiments, the thickness of the nano metal layer may be within a range from 6 nm to 7 nm.

In some embodiments, the nano metal wire layer may include at least one of silver nanowire, gold nanowire, copper nanowire, platinum nanowire, aluminum nanowire, titanium nanowire, or tin nanowire. In some embodiments, the nano metal wire layer may include a film layer structure prepared by coating a nano metal wire ink. In some embodiments, nano metal wires in the nano metal wire ink may include at least one of the silver nanowire, the gold nanowire, the copper nanowire, the platinum nanowire, the aluminum nanowire, the titanium nanowire, or the tin nanowire.

In some embodiments, when the conductive nano layer 123 is the nano metal wire layer, the conductive layer 120 includes the nano metal wire layer and the conductive protective layer 124. It may be understood that the hollow grids 1211 are formed by etching the nano metal wire layer and the conductive protective layer 124 through the yellow light etching, or the hollow grids 1211 substantially does not include the nano metal wire layer and the conductive protective layer 124.

The conductive protective layer 124 may protect the conductive nano layer 123 to prevent the conductive nano layer 123 from being corroded. In some embodiments, the conductive protective layer 124 may include at least one of a polymer layer, a metal oxide layer, or a graphene layer.

In some embodiments, the conductive protective layer 124 may include the polymer layer. In some embodiments, the polymer layer may include a film structure obtained by coating a protective solution containing a polymer, drying, and curing. In some embodiments, the protective solution containing the polymer may include aliphatic urethane acrylate, aromatic urethane acrylate, urethane methacrylate, diallyl phthalate, epoxy acrylate, epoxy methacrylate, or the like, or any combination thereof. In some embodiments, when the conductive nano layer 123 and the conductive protective layer 124 are arranged in layers (e.g., the conductive nano layer 123 is located below the conductive protective layer 124), a thickness of the polymer layer may be within a range from 0.5 nm to 10 nm. In some embodiments, the thickness of the polymer layer may be within a range from 1 nm to 9 nm. In some embodiments, the thickness of the polymer layer may be within a range from 2 nm to 8 nm. In some embodiments, the thickness of the polymer layer may be within a range from 3 nm to 7 nm. In some embodiments, the thickness of the polymer layer may be within a range from 4 nm to 6 nm. In some embodiments, the thickness of the polymer layer may be within a range from 4.5 nm to 5 nm. In some embodiments, the thickness of the polymer layer may be 0.5 nm, 1 nm, 3 nm, 5 nm, 7 nm, 9 nm, or 10 nm.

In some embodiments, the conductive protective layer 124 may include the metal oxide layer. In some embodiments, the metal oxide layer may include a film structure obtained by magnetron sputtering a metal oxide. In some embodiments, the metal oxide may include, but not be limited to, indium tin oxide (ITO). In some embodiments, when the conductive nano layer 123 and the conductive protective layer 124 are arranged in layers (e.g., the conductive nano layer 123 is located below the conductive protective layer 124), a thickness of the metal oxide layer may be within a range from 10 nm to 50 nm. In some embodiments, the thickness of the metal oxide layer may be within a range from 15 nm to 45 nm. In some embodiments, the thickness of the metal oxide layer may be within a range from 20 nm to 40 nm. In some embodiments, the thickness of the metal oxide layer may be within a range from 25 nm to 35 nm. In some embodiments, the thickness of the metal oxide layer may be within a range from 28 nm to 30 nm. In some embodiments, the thickness of the metal oxide layer may be 10 nm, 20 nm, 30 nm, 40 nm, or 50 nm.

In the embodiments of the present disclosure, for different conductive protective layers 124 (e.g., the polymer layer or the metal oxide layer), different thicknesses of the conductive protective layer 124 can be set, which can not only improve the weather resistance of the prepared conductive film 100, but also reduce the difficulty of the yellow light etching, thereby improving the efficiency of the yellow light etching.

In some embodiments, when the conductive nano layer 123 is the nano metal wire layer, at least a portion of the conductive protective layer 124 may be located in net gaps formed by nano metal wires in the nano metal wire layer. For example, at least a portion of the conductive protective layer 124 may fill or embed in the net gaps formed by the nano metal wires. In this case, the thickness of the conductive protective layer 124 may be understood as a distance between a surface of the base film 110 in contact with the conductive protective layer 124 and a horizontal plane of the conductive protective layer 124 located in the net gaps formed by the nano metal wires. A thickness of the nano metal wire layer may be understood as a distance between a surface of the base film 110 in contact with the nano metal wire layer and a highest point of the nano metal wire layer.

In some embodiments, at least a portion of the nano metal wire layer may protrude from the conductive protective layer 124. It may be understood that a thickness of the at least a portion of the nano metal wire layer may be larger than the thickness of the conductive protective layer 124. In some embodiments, a thickness of a portion of the nano metal wire layer may be equal to the thickness of the conductive protective layer 124. In some embodiments, the thickness of a portion of the nano metal wire layer may be less than the thickness of the conductive protective layer 124.

In some embodiments, the thickness of the conductive protective layer 124 may be within a range from 30% to 110% of the thickness of the nano metal wire layer. In some embodiments, the thickness of the conductive protective layer 124 may be within a range from 30% to 100% of the thickness of the nano metal wire layer. In some embodiments, the thickness of the conductive protective layer 124 may be within a range from 30% to 90% of the thickness of the nano metal wire layer. In some embodiments, the thickness of the conductive protective layer 124 may be within a range from 30% to 80% of the thickness of the nano metal wire layer. In some embodiments, the thickness of the conductive protective layer 124 may be within a range from 30% to 70% of the thickness of the nano metal wire layer. In some embodiments, the thickness of the conductive protective layer 124 may be within a range from 30% to 60% of the thickness of the nano metal wire layer. In some embodiments, the thickness of the conductive protective layer 124 may be within a range from 30% to 50% of the thickness of the nano metal wire layer. In some embodiments, the thickness of the conductive protective layer 124 may be within a range from 30% to 40% of the thickness of the nano metal wire layer. In some embodiments, the thickness of the conductive protective layer 124 may be within a range from 40% to 100% of the thickness of the nano metal wire layer. In some embodiments, the thickness of the conductive protective layer 124 may be within a range from 40% to 90% of the thickness of the nano metal wire layer. In some embodiments, the thickness of the conductive protective layer 124 may be within a range from 50% to 80% of the thickness of the nano metal wire layer. In some embodiments, the thickness of the conductive protective layer 124 may be within a range from 60% to 70% of the thickness of the nano metal wire layer. In some embodiments, the thickness of the conductive protective layer 124 may be 30%, 40%, 50%, 60%, 70%, 80%, 90%, 100%, or 110% of the thickness of the nano metal wire layer.

The conductive protective layer 124 is located in the net gaps formed by the nano metal wires in the nano metal wire layer, or the thickness of the conductive protective layer 124 is less than the thickness of the nano metal wire layer, thereby allowing various etching solutions (e.g., the hydrochloric acid-nitric acid system etching solution, the ferric chloride system etching solution, the ferric nitrate system etching solution, or the phosphoric acid-nitric acid-acetic acid system etching solution) to be applicable to etching to form the conductive grid structure. In addition, since a coverage of the conductive protective layer 124 including an acrylic resin (e.g., at least one of aliphatic urethane acrylate, aromatic urethane acrylate, urethane methacrylate, epoxy acrylate, or epoxy methacrylate) on the nano metal wire layer (e.g., the silver nanowire layer) is relatively low, contact points between the etching solutions and the nano metal wire layer can be increased, thereby facilitating to etching the nano metal wire layer in a short time and improving the etching efficiency. In some embodiments, when the thickness of the conductive protective layer 124 is within a range from 90% to 110% of the thickness of the nano metal wire layer, the conductive protective layer 124 substantially covers the nano metal wire layer, and the contact points between the etching solution and the nano metal wire layer are reduced, but the ferric nitrate system etching solution and/or the phosphoric acid-nitric acid-acetic acid system etching solution can still etch the nano metal wire layer to form the conductive grid structure.

In some embodiments, as shown in FIG. 3 and FIG. 4, the base film 110 and the conductive layer before the yellow light etching may include the base film 110, the conductive nano layer 123, and the conductive protective layer 124. It may be understood that the conductive layer before the yellow light etching includes the conductive nano layer 123 and the conductive protective layer 124. The conductive nano layer 123 and the conductive protective layer 124 as a whole may be referred to as the conductive grid lines 1212. In some embodiments, a light transmittance of the base film 110 and the conductive layer before the yellow light etching may be within a range from 20% to 90%. In some embodiments, the light transmittance of the base film 110 and the conductive layer before the yellow light etching may be within a range from 20% to 85%. In some embodiments, the light transmittance of the base film 110 and the conductive layer before the yellow light etching may be within a range from 30% to 85%. In some embodiments, the light transmittance of the base film 110 and the conductive layer before the yellow light etching may be within a range from 40% to 85%. In some embodiments, the light transmittance of the base film 110 and the conductive layer before the yellow light etching may be within a range from 50% to 85%. In some embodiments, the light transmittance of the base film 110 and the conductive layer before the yellow light etching may be within a range from 60% to 85%. In some embodiments, the light transmittance of the base film 110 and the conductive layer before the yellow light etching may be within a range from 70% to 85%. In some embodiments, the light transmittance of the base film 110 and the conductive layer before the yellow light etching may be within a range from 80% to 85%. In some embodiments, the light transmittance of the base film 110 and the conductive layer before the yellow light etching may be larger than or equal to 50%. In some embodiments, the light transmittance of the base film 110 and the conductive layer before the yellow light etching may be larger than or equal to 55%. In some embodiments, the light transmittance of the base film 110 and the conductive layer before the yellow light etching may be larger than or equal to 60%. In some embodiments, the light transmittance of the base film 110 and the conductive layer before the yellow light etching may be larger than or equal to 65%. In some embodiments, the light transmittance of the base film 110 and the conductive layer before the yellow light etching may be larger than or equal to 70%. In some embodiments, the light transmittance of the base film 110 and the conductive layer before the yellow light etching may be larger than or equal to 75%. In some embodiments, the light transmittance of the base film 110 and the conductive layer before the yellow light etching may be larger than or equal to 80%. By setting the light transmittance of the base film 110 and the conductive layer before the yellow light etching within the range from 20% to 90%, the base film 110 and the conductive layer before the yellow light etching (e.g., the conductive grid lines 1212) can also transmit the visible light. This design not only improves the overall light transmittance of the conductive film 100, but also eliminates the need for extremely fine conductive grid lines 1212 after the yellow light etching. Therefore, the precision requirements on equipment and processes for the yellow light etching can be significantly relaxed, thereby reducing processing costs and improving the product yield. In addition, since the conductive grid lines 1212 can already transmit the visible light and has the light transmittance of 20%-90%, the difference in the light transmittance between the conductive grid lines 1212 and the hollow grids 1211 is relatively small.

In some embodiments, a square resistance of the base film 110 and the conductive layer before the yellow light etching may be within a range from 0.1 Ω/□ to 50 Ω/□. In some embodiments, the square resistance of the base film 110 and the conductive layer before the yellow light etching may be within a range from 2 Ω/□ to 45 Q/o. In some embodiments, the square resistance of the base film 110 and the conductive layer before the yellow light etching may be within a range from 4 Ω/□ to 40 Q/o. In some embodiments, the square resistance of the base film 110 and the conductive layer before the yellow light etching may be within a range from 6Ω/□ to 35 Ω/□. In some embodiments, the square resistance of the base film 110 and the conductive layer before the yellow light etching may be within a range from 8 Ω/□ to 30 Ω/□. In some embodiments, the square resistance of the base film 110 and the conductive layer before the yellow light etching may be within a range from 10 Ω/□ to 25 Ω/□. In some embodiments, the square resistance of the base film 110 and the conductive layer before the yellow light etching may be within a range from 15 Ω/□ to 20 Ω/□. In some embodiments, the square resistance of the base film 110 and the conductive layer before the yellow light etching may be 1 Ω/□, 5 Ω/□, 8 Ω/□, 10 Ω/□, 20 Ω/□, 30 Ω/□, 40 Ω/□, or 50 Ω/□. By setting the square resistance of the base film 110 and the conductive layer before the yellow light etching within the range from 0.1 Ω/□ to 50 Ω/□, the conductivity of the conductive film 100 obtained after the yellow light etching can meet the requirements for later applications of a touch function sheet.

A thickness (shown as "h" in FIG. 3 and FIG. 4) of the conductive layer 120 on the base film 110 refers to a thickness of the conductive layer before the yellow light etching, including a sum of the thickness of the conductive nano layer 123 (e.g., the nano metal wire layer) and the thickness of the conductive protective layer 124. In some embodiments, the thickness of the conductive layer may be within a range from 50 nm to 300 nm. In some embodiments, the thickness of the conductive layer may be within a range from 80 nm to 270 nm. In some embodiments, the thickness of the conductive layer may be within a range from 100 nm to 250 nm. In some embodiments, the thickness of the conductive layer may be within a range from 120 nm to 230 nm. In some embodiments, the thickness of the conductive layer may be within a range from 150 nm to 200 nm. In some embodiments, the thickness of the conductive layer may be within a range from 160 nm to 180 nm. In some embodiments, the thickness of the conductive layer may be 50 nm, 150 nm, 200 nm, 250 nm, or 300 nm. By setting the thickness of the conductive layer within the range from 50 nm to 300 nm, the difficulty of the yellow light etching can be reduced, thereby improving the efficiency of the yellow light etching.

In some embodiments, a haze of the base film 110 and the conductive layer before the yellow light etching may be within a range from 1.0% to 30%. In some embodiments, the haze of the base film 110 and the conductive layer before the yellow light etching may be within a range from 3% to 28%. In some embodiments, the haze of the base film 110 and the conductive layer before the yellow light etching may be within a range from 5% to 25%. In some embodiments, the haze of the base film 110 and the conductive layer before the yellow light etching may be within a range from 8% to 23%. In some embodiments, the haze of the base film 110 and the conductive layer before the yellow light etching may be within a range from 10% to 20%. In some embodiments, the haze of the base film 110 and the conductive layer before the yellow light etching may be within a range from 12% to 18%. In some embodiments, the haze of the base film 110 and the conductive layer before the yellow light etching may be within a range from 14% to 15%.

In some embodiments, the conductive layer 120 may further include colored particles. In some embodiments, a particle size of the colored particles may be within a range from 0.05 µm to 1.0 µm. In some embodiments, the particle size of the colored particles may be within a range from 0.05 µm to 1.0 µm. In some embodiments, the particle size of the colored particles may be within a range from 0.1 µm to 0.9 µm. In some embodiments, the particle size of the colored particles may be within a range from 0.2 µm to 0.8 µm. In some embodiments, the particle size of the colored particles may be within a range from 0.3 µm to 0.7 µm. In some embodiments, the particle size of the colored particles may be within a range from 0.4 µm to 0.6 µm. In some embodiments, the particle size of the colored particles may be within a range from 0.45 µm to 0.55 µm. In some embodiments, the particle size refers to an equivalent diameter.

When the particle size reaches a nanometer scale, a quantum size effect can be generated. That is, the nano metal wires in the conductive grid lines 1212 obtained by etching absorb specific wavelength bands due to local surface plasmon resonance, resulting in a color change in the conductive film 100 macroscopically. By adding the colored particles to the conductive layer 120, color compensation can be performed for the wavelength bands absorbed by the nano metal wires, so that the conductive film 100 appears approximately transparent and colorless as a whole, and the overall optical appearance tends to be consistent. At the same time, the etching traces of the conductive film 100 can be less obvious, thereby avoiding the problems of moire patterns or scattered points that occur in later specific applications of the conductive film.

By using the yellow light etching to etch the conductive layer 120, the yellow light etching can more effectively etch away the conductive nano layer 123 and the conductive protective layer 124, so that the base film and the conductive region including the conductive grid structure (e.g., the conductive film 100 shown in FIG. 1B or the first conductive region 121 shown in FIG. 1C) have excellent optical performance (e.g., the high light transmittance and the low haze).

In some embodiments, if the light transmittance of the base film 110 is T₀, and the light transmittance of the base film 110 and the conductive layer before the yellow light etching is T₁, a light transmittance T₂ of the base film 110 and the conductive region including the conductive grid structure obtained after the yellow light etching (e.g., the conductive film 100 shown in FIG. 1B or the first conductive region 121 shown in FIG. 1C) may be expressed as *T*₂ *= T*₀ *-* (*T*₀ *- T*₁)· (1 - S).

In some embodiments, the light transmittance of the base film and the conductive region including the conductive grid structure may be larger than or equal to 80%. In some embodiments, the light transmittance of the base film and the conductive region including the conductive grid structure may be larger than or equal to 82%. In some embodiments, the light transmittance of the base film and the conductive region including the conductive grid structure may be larger than or equal to 84%. In some embodiments, the light transmittance of the base film and the conductive region including the conductive grid structure may be larger than or equal to 86%. In some embodiments, the light transmittance of the base film and the conductive region including the conductive grid structure may be larger than or equal to 88%. In some embodiments, the light transmittance of the base film and the conductive region including the conductive grid structure may be larger than or equal to 90%. In some embodiments, the light transmittance of the base film and the conductive region including the conductive grid structure may be larger than or equal to 92%.

In some embodiments, a square resistance of the conductive region including the conductive grid structure may be within a range from 5 Ω/□ to 150 Ω/□. In some embodiments, the square resistance of the conductive region including the conductive grid structure may be within a range from 5 Ω/□ to 140 Ω/□. In some embodiments, the square resistance of the conductive region including the conductive grid structure may be within a range from 5 Ω/□ to 130 Ω/□. In some embodiments, the square resistance of the conductive region including the conductive grid structure may be within a range from 5 Ω/□ to 120 Ω/□. In some embodiments, the square resistance of the conductive region including the conductive grid structure may be within a range from 5 Ω/□ to 110 Q/o. In some embodiments, the square resistance of the conductive region including the conductive grid structure may be within a range from 5 Ω/□ to 100 Ω/□. In some embodiments, the square resistance of the conductive region including the conductive grid structure may be within a range from 5 Ω/□ to 90 Ω/□. In some embodiments, the square resistance of the conductive region including the conductive grid structure may be within a range from 5 Ω/□ to 80 Ω/□. In some embodiments, the square resistance of the conductive region including the conductive grid structure may be within a range from 5 Ω/□ to 70 Ω/□. In some embodiments, the square resistance of the conductive region including the conductive grid structure may be within a range from 5 Ω/□ to 60 Q/o. In some embodiments, the square resistance of the conductive region including the conductive grid structure may be within a range from 5 Ω/□ to 50 Ω/□. In some embodiments, the square resistance of the conductive region including the conductive grid structure may be within a range from 5 Ω/□ to 40 Ω/□. In some embodiments, the square resistance of the conductive region including the conductive grid structure may be within a range from 5 Ω/□ to 30 Ω/□. In some embodiments, the square resistance of the conductive region including the conductive grid structure may be within a range from 5 Ω/□ to 20 Ω/□. In some embodiments, the square resistance of the conductive region including the conductive grid structure may be within a range from 5 Ω/□ to 10 Q/o. In some embodiments, the square resistance of the conductive region including the conductive grid structure may be within a range from 10 Ω/□ to 14 Ω/□. In some embodiments, the square resistance of the conductive region including the conductive grid structure may be within a range from 20 Ω/□ to 130 Ω/□. In some embodiments, the square resistance of the conductive region including the conductive grid structure may be within a range from 30 Ω/□ to 120 Q/o. In some embodiments, the square resistance of the conductive region including the conductive grid structure may be within a range from 40 Ω/□ to 110 Ω/□. In some embodiments, the square resistance of the conductive region including the conductive grid structure may be within a range from 50 Ω/□ to 100 Q/o. In some embodiments, the square resistance of the conductive region including the conductive grid structure may be within a range from 60 Ω/□ to 90 Ω/□. In some embodiments, the square resistance of the conductive region including the conductive grid structure may be within a range from 70 Ω/□ to 80 Q/o.

In some embodiments, if a haze of the base film 110 is H₀, and the haze of the base film 110 and the conductive layer before the yellow light etching is H₁, a haze H₂ of the base film and the conductive region including the conductive grid structure obtained after the yellow light etching (e.g., the conductive film 100 as shown in FIG. 1B or the first conductive region 121 as shown in FIG. 1C) may be expressed as *H*₂ *= H*₀ *+* (*H*₁ *- H*₀)*·* (1 - *S*) .

In some embodiments, the haze of the base film and the conductive region including the conductive grid structure may be within a range from 0.8% to 4.0%. In some embodiments, the haze of the base film and the conductive region including the conductive grid structure may be within a range from 1% to 3.5%. In some embodiments, the haze of the base film and the conductive region including the conductive grid structure may be within a range from 1.2% to 3.2%. In some embodiments, the haze of the base film and the conductive region including the conductive grid structure may be within a range from 1.5% to 3.0%. In some embodiments, the haze of the base film and the conductive region including the conductive grid structure may be within a range from 1.8% to 2.7%. In some embodiments, the haze of the base film and the conductive region including the conductive grid structure may be within a range from 2% to 2.5%.

It should be noted that, in the embodiments of the present disclosure, "touch electrode" and "touch function sheet" may be used interchangeably with "touch assembly."

It should be noted that the above description of the conductive film is merely for illustration and explanation, and does not limit the applicable scope of the present disclosure. For those skilled in the art, various modifications and changes may be made to the conductive film under the guidance of the present disclosure. However, these modifications and changes are still within the scope of the present disclosure.

Some embodiments of the present disclosure provide a preparation method of a conductive film. The method may include following operations.

In S1, a conductive layer is prepared on a base film.

In some embodiments, the conductive layer may include a conductive nano layer. The conductive nano layer may include at least one of a nano metal layer or a nano metal wire layer.

In some embodiments, the nano metal layer may be formed through magnetron sputtering of nano metal. In some embodiments, the nano metal wire layer may be formed by coating nano metal wire ink. For example, a roll-to-roll coating manner may be used to coat the nano metal wire ink on the base film (e.g., a PET base film, a CPI base film) to prepare the nano metal wire layer. A solid content of the nano metal wire ink refers to a mass fraction of nano metal wires in the nano metal wire ink. In some embodiments, the solid content of the nano metal wire ink may be within a range from 0.08% to 1.0%. In some embodiments, the solid content of the nano metal wire ink may be within a range from 0.1% to 1.5%. In some embodiments, the solid content of the nano metal wire ink may be 0.08%, 0.1%, 0.2%, 0.3%, 0.4%, 0.5%, 0.6%, 0.7%, 0.8%, 0.9%, 1.0%, 1.1%, 1.2%, 1.3%, 1.4%, or 1.5%. In some embodiments, a diameter of the nano metal wires may be within a range from 10 nm to 50 nm. In some embodiments, the diameter of the nano metal wires may be within a range from 10 nm to 30 nm. In some embodiments, a length of the nano metal wire may be within a range from 10 µm to 40 µm. In some embodiments, the length of the nano metal wire may be 10 µm, 20 µm, 30 µm, 40 µm, or 50 µm.

In some embodiments, the conductive layer may further include a conductive protective layer. In some embodiments, the conductive protective layer may include at least one of a polymer layer, a metal oxide layer, or a graphene layer. In some embodiments, preparing the conductive protective layer may include coating a protective solution containing a polymer on the conductive nano layer, and drying the protective solution to obtain the polymer layer. In some embodiments, the preparing the conductive protective layer may include forming the metal oxide layer on the conductive nano layer by magnetron sputtering a metal oxide. In some embodiments, the preparing the conductive protective layer may include coating a graphene oxide solution on the conductive nano layer, and drying and reducing the graphene oxide solution to obtain the graphene layer.

In some embodiments, when the conductive nano layer and the conductive protective layer are not layered, the preparing the conductive layer on the base film may include mixing the nano metal wire ink and the protective solution to obtain a mixture, and coating the mixture on the base film.

In some embodiments, when the conductive nano layer and the conductive protective layer are layered, the preparing the conductive layer on the base film may include preparing the conductive nano layer (e.g., the nano metal wire layer) on the base film, and preparing the conductive protective layer on the conductive nano layer (e.g., the nano metal wire layer).

In some embodiments, when the conductive nano layer is the nano metal wire layer, the preparing the conductive layer on the base film may further include preparing the nano metal wire layer on the base film, and coating the conductive protective layer in net gaps formed by the nano metal wires in the nano metal wire layer, such that at least a portion of the conductive protective layer is located in the net gaps formed by the nano metal wires in the nano metal wire layer. It may be understood that at least a portion of the conductive protective layer fills or embeds in the net gaps formed by the nano metal wires.

In S2, the conductive film may be obtained by etching the conductive layer. The conductive layer may include one or more conductive regions. When the conductive layer includes a plurality of conductive regions (which may be understood as at least two conductive regions), the plurality of conductive regions include a first conductive region and a second conductive region. It may be understood that the conductive layer includes the first conductive region and the second conductive region. At least one of the one or more conductive regions includes a conductive grid structure. In the embodiments of the present disclosure, the first conductive region includes the conductive grid structure. The conductive grid structure includes hollow grids and conductive grid lines. The hollow grids are formed by etching the conductive nano layer (e.g., the nano metal wire layer) and the conductive protective layer through yellow light etching. The etching the conductive layer includes forming the conductive region (e.g., the first conductive region) including the conductive grid structure on the conductive layer through the yellow light etching. The conductive layer includes the first conductive region including the conductive grid structure formed through the yellow light etching, and the second conductive region on which the yellow light etching is not performed. The second conductive region is disposed around the first conductive region.

In some embodiments, in operation S2, in a yellow light environment, a photoresist may be coated on the base film and the conductive layer on which the yellow light etching is not performed by micro-gravure coating or slit roll-to-roll coating (e.g., via a roll-to-roll device), and baked to dry the photoresist to obtain a film material. In some embodiments, a device for baking may include, but not be limited to, an oven baking, an infrared oven baking, etc. In some embodiments, a baking temperature may be within a range from 60 °C to 100 °C. In some embodiments, the baking temperature may be 60 °C, 70 °C, 80 °C, 90 °C, or 100 °C. In some embodiments, a thickness of the photoresist after drying may be within a range from 1.0 µm to 5.0 µm. In some embodiments, the thickness of the photoresist after drying may be within a range from 1.2 µm to 1.8 µm. In some embodiments, the thickness of the photoresist after drying may be 1.0 µm, 1.5 µm, 2.0 µm, 2.5 µm, 3.0 µm, 3.5 µm, 4.0 µm, 4.5 µm, or 5.0 µm. In some embodiments, a negative photosensitive dry film material (also referred to as a "negative photoresist") with a preset thickness (e.g., a range of 10 µm-30 µm) may be pressed on the conductive layer. The film material should be protected from light during storage, transfer, or transportation.

In some embodiments, a pattern on a film or a mask may be transferred to the film material coated with the photoresist through exposing and developing. In some embodiments, the exposure refers to covering the film material coated with the photoresist with the film or the mask, and irradiating the film material with ultraviolet light to cause a chemical reaction in the photoresist at an irradiated position, thereby changing a solubility of the photoresist at the irradiated position in a developer. In some embodiments, an exposure energy may be within a range of 50 mJ/cm² to 300 mJ/cm². In some embodiments, the exposure energy may be 50 mJ/cm², 100 mJ/cm², 150 mJ/cm², 200 mJ/cm², 250 mJ/cm², 300 mJ/cm², etc. In some embodiments, the exposure may include continuous exposure or sheet-type exposure. The pattern on the film or the mask may be a polygonal grid image (e.g., a square grid pattern or a rhombus grid pattern). The pattern on the film or the mask matches a pattern formed by the conductive grid structure.

In some embodiments, the development refers to immersing or spraying the exposed photoresist in the developer to transfer the pattern on the film or the mask to the photoresist. The photoresist includes a positive photoresist and the negative photoresist. The positive photoresist causes the photoresist in an exposed region to dissolve in the developer, and the negative photoresist causes the photoresist in an unexposed region to dissolve in the developer. In some embodiments, the developer may include, but not be limited to, a KOH solution of 0.8 wt%-0.9 wt%, a tetramethylammonium hydroxide (TMAH) solution of 2.38 wt%, a sodium carbonate solution of 0.7 wt%-1.2 wt%, etc. In some embodiments, a development temperature may be within a range from 23 °C to 25 °C.

The film material with the photoresist pattern formed by the development may soften and swell, which affects a resistance to corrosion of the film material. Therefore, hard baking may be performed to remove moisture from the film material with the photoresist pattern formed after the development, thereby enhancing adhesion between the pattern and the film material. In some embodiments, the hard baking may include, but not be limited to, oven hard baking or infrared oven hard baking. In some embodiments, a hard baking temperature may be within a range from 80 °C to 120 °C. In some embodiments, the hard baking temperature may be within a range from 100 °C to 120 °C. In some embodiments, the hard baking temperature may be 100 °C, 105 °C, 110 °C, 115 °C, or 120 °C. In some embodiments, a hard baking time may be within a range from 60 s to 300 s. In some embodiments, the hard baking time may be within a range from 60 s to 180 s. In some embodiments, the hard baking time may be 60 s, 70 s, 80 s, 90 s, 100 s, 110 s, 120 s, 130 s, 140 s, 150 s, 160 s, 170 s, or 180 s.

An etching solution is used to corrode or oxidize the conductive layer on the film material that is not protected by the photoresist, and the conductive layer protected by the photoresist is retained to form the conductive grid structure. The etching solution may corrode or oxidize the conductive nano layer (e.g., a silver nanowire layer) without damaging a surface of the film material and the photoresist. The etching solution may be a hydrochloric acid-nitric acid system etching solution, a ferric chloride system etching solution, a ferric nitrate system etching solution, a ferric nitrate-nitric acid system etching solution, a phosphoric acid-nitric acid-acetic acid system etching solution, etc. In some embodiments, a temperature of the etching solution may be within a range from 35 °C to 50 °C. In some embodiments, the temperature of the etching solution may be 35 °C, 40 °C, 45 °C, or 50 °C. In some embodiments, an etching time may be within a range from 60 s to 180 s. In some embodiments, the etching time may be 80 s, 100 s, 120 s, 140 s, 160 s, or 180 s.

A stripper is used to remove the remaining photoresist on the film material after etching, and then high-purity water is used to rinse impurities (e.g., residual liquid, residual glue, etc.) on a surface of the obtained conductive film. In some embodiments, the stripper may be an alkaline solution. In some embodiments, an alkali content of the stripper is greater than an alkali content of the developer. For example, the stripper may be a NaOH solution of 3 wt% -5 wt%. In some embodiments, a temperature of the stripper may be within a range from 35 °C to 45 °C. In some embodiments, the temperature of the stripper may be 35 °C, 40 °C, or 45 °C.

In some embodiments, on a DES (developing, etching, and stripping) line, an exposed film material may be developed with the developer to obtain a grid pattern, and then the developed film material may be transferred to an oven for drying to perform hard baking. Then, the film material after the hard baking is etched and stripped to obtain the conductive film.

By providing the conductive grid structure in the at least one conductive region (e.g., the first conductive region), the conductive grid lines of the conductive grid structure can achieve conductivity. Since a light transmittance of the nano metal wire conductive layer is within a range from 20% to 90%, the conductive grids are also transparent. The nano metal wires in the hollow grids of the conductive grid structure are completely etched, thereby reducing reflection and scattering of the visible light by randomly distributed nano metal wires. Further, a proportion of the hollow regions is within a range from of 60% to 97%, thereby improving optical issues such as whitening, yellowing, or hazing inherent in the nano metal wire conductive layer. The hollow grids are formed though the yellow light etching, and the yellow light etching can more effectively etch away the nano metal wire layer and the conductive protective layer, so that the conductive region including the conductive grid structure has excellent optical performance (e.g., the high light transmittance and the low haze). In some embodiments, the light transmittance of the base film and the conductive region including the conductive grid structure (e.g., the first conductive region) prepared by the above method may be greater than or equal to 80%, the haze thereof may be within a range from 0.8% to 4.0%, and the square resistance thereof may be within a range from 5 Ω/□ to 150 Ω/□. In some embodiments, the visible light transmittance of the base film and the first conductive region prepared by the above method may be within a range from 80% to 92%, the haze thereof may be within a range from 0.8% to 4.0%, and the sheet resistance thereof may be within a range from 5 Ω to 150 Ω.

More descriptions regarding the base film, the conductive layer, the conductive nano layer, the nano metal wire layer, the nano metal layer, the conductive protective layer, the polymer layer, the metal oxide layer, the first conductive region, the second conductive region, and the conductive film may be found elsewhere of the present disclosure (e.g., FIG. 1A, FIG. 1B, FIG. 1C, FIGs. 2-7, and related descriptions thereof), which are not repeated herein.

By preparing the conductive film through the yellow light etching described above, the conductive region including the conductive grid structure (e.g., the first conductive region) can have relatively excellent optical performance. For example, the visible light transmittance of the base film and the first conductive region may be larger than 80% (e.g., within a range from 80% to 92%), and the haze may be less than or equal to 4.0%. Compared with laser etching, the conductive film (e.g., the first conductive region) having the above specific structure is prepared through the yellow light etching in the embodiments of the present disclosure, which can improve the production efficiency of the conductive film and be applied for large-scale batch production.

It should be noted that the above descriptions regarding the preparation method of the conductive film are merely for illustration and explanation, and do not limit the applicable scope of the present disclosure. For those skilled in the art, various modifications and changes can be made to the preparation method of the conductive film under the guidance of the present disclosure. However, these modifications and changes still fall within the scope of the present disclosure.

Some embodiments of the present disclosure further provide a touch assembly. The touch assembly includes the conductive film mentioned above.

Some embodiments of the present disclosure further provide a touch functional sheet.
The touch functional sheet includes the conductive film mentioned above. A method for preparing the touch functional sheet may include: screen-printing on a second conductive region of the conductive film with silver paste through a screen plate; preparing touch sensor peripheral lines and touch sensor electrodes by performing laser etching using a laser; laminating the touch sensor electrodes via optically clear adhesive (OCA) to obtain laminated touch sensor electrodes; and dividing the laminated touch sensor electrodes to obtain the touch functional sheet.

In some embodiments, etching the conductive film to prepare the touch sensor electrodes may include etching the second conductive region of the conductive film (e.g., by yellow light etching or the laser etching) to form a touch pattern and lead wires. In some embodiments of the present disclosure, a resistance of the base film and the conductive layer on which the yellow light etching is not performed is low. When a touch functional sheet smaller than 10 inches is prepared, operations of the screen-printing with silver paste and the laser etching lead wires are not required, thereby improving the production efficiency of the touch functional sheet.

In some embodiments, the operation of etching the second conductive region of the conductive film to prepare the touch sensor electrodes may be performed simultaneously with the preparation of the first conductive region of the conductive film (e.g., obtaining the first conductive region of the conductive film by performing the yellow light etching on the conductive layer), thereby simplifying the preparation process of the touch functional sheet and improving the preparation efficiency. For example, during the process of performing the yellow light etching on the conductive layer, the yellow light etching may be performed on the touch pattern and the lead wires simultaneously.

By laminating the two touch sensor electrodes via the OCA, the OCA can fill the hollow grids of the first conductive region of the conductive film, thereby reducing reflection and scattering of the visible light by the touch pattern, and improving the optical performance of the touch functional sheet.

In some embodiments, a light transmittance of the touch functional sheet may be larger than or equal to 80%. In some embodiments, the light transmittance of the touch functional sheet may be larger than or equal to 82%. In some embodiments, the light transmittance of the touch functional sheet may be larger than or equal to 84%. In some embodiments, the light transmittance of the touch functional sheet may be larger than or equal to 86%. In some embodiments, the light transmittance of the touch functional sheet may be larger than or equal to 88%. In some embodiments, the light transmittance of the touch functional sheet may be larger than or equal to 90%. In some embodiments, the light transmittance of the touch functional sheet may be larger than or equal to 92%.

In some embodiments, a haze of the touch functional sheet may be within a range from 1.0% to 4.0%. In some embodiments, the haze of the touch functional sheet may be within a range from 1.2% to 3.7%. In some embodiments, the haze of the touch functional sheet may be within a range from 1.5% to 3.4%. In some embodiments, the haze of the touch functional sheet is within a range from 1.8% to 3.1%. In some embodiments, the haze of the touch functional sheet is within a range from 2.0% to 2.8%. In some embodiments, the haze of the touch functional sheet is within a range from 2.2% to 2.5%.

It should be noted that the above description of the touch functional sheet is merely for illustration and explanation, and does not limit the scope of the present disclosure. For those skilled in the art, various modifications and changes may be made to the touch functional sheet under the guidance of the present disclosure. However, these modifications and changes are still within the scope of the present disclosure.

Table 1 shows relevant experimental data of the conductive film and the touch assembly prepared by the preparation method. It should be noted that Table 1 does not list all relevant parameters.

**TABLE 1 EXPERIMENTAL COMPARISON TABLE OF EMBODIMENTS 1-7 (Em 1-7) AND COMPARATIVE EXAMPLE 1 (CE 1)**

| | Material and thickness of base film /µm | Solid content of silver nano wire ink /wt% | Diameter of silver nano wire /nm | Length of silver nano wire /µm | Thickness of silver nano wire conductive layer /nm | Type and thickness of conductive protective layer /nm | Thickness 1 /nm | Light transmittance 1 /% | Haze 1 /% |
|---|---|---|---|---|---|---|---|---|---|
| Em 1 | PET/125 | 0.3 | 25 | 20 | none | OC/9 | 120 | 75.1 | 9.2 |
| Em 2 | PET/188 | 0.22 | 25 | 20 | 6 | ITO/15 | 110 | 83.2 | 5.3 |
| Em 3 | CPI/50 | 0.1 | 20 | 15 | none | OC/6 | 80 | 88.9 | 1.75 |
| Em 4 | PET/125 | 0.36 | 18 | 15 | none | OC/10 | 160 | 55.6 | 15.8 |
| Em 5 | PET/125 | 0.22 | 25 | 20 | none | OC/3 | 110 | 83.2 | 4.6 |
| Em 6 | PET/125 | 0.22 | 25 | 20 | none | OC/3 | 110 | 83.2 | 4.6 |
| Em 7 | PET/125 | 0.22 | 25 | 20 | none | OC/3 | 110 | 83.2 | 4.6 |
| CE 1 | PET/125 | 0.22 | 25 | 20 | none | OC/3 | 110 | 83.2 | 4.6 |

**TABLE 1 EXPERIMENTAL COMPARISON TABLE OF EMBODIMENTS 1-7 AND COMPARATIVE EXAMPLE 1 (CONTINUED)**

| | Sheet resistance 1 /Ω/□ | Arrangement shape of conductive grid lines | Width of conductive grid lines /µm | Ratio of total area of hollow grids to area of first conductive region /% | Light transmittance 2 /% | Sheet resistance 2 /Ω/□ | Haze 2 /% |
|---|---|---|---|---|---|---|---|
| Em 1 | 4.5-5.5 | Rhombus as shown in FIG. 5 with acute angle of 66° and side length of 100 µm | 15 | 82.5 | 88.5 | 50-60 | 3.2 |
| Em 2 | 7-9 | Square as shown in FIG. 6 with side length of 120 µm | 20 | 85.2 | 86.7 | 45-55 | 2.6 |
| Em 3 | 27-33 | Square with side length of 85 µm | 20 | 80.0 | 90.1 | 140-160 | 0.83 |
| Em 4 | 1.5-2.0 | Square with side length of 210 µm | 7 | 96.7 | 90.8 | 60-80 | 2.4 |
| Em 5 | 9-11 | Square with side length of 130 µm | 30 | 80.4 | 87.6 | 50-60 | 3.2 |
| Em 6 | 9-11 | Square with side length of 130 µm | 20 | 86.2 | 88.5 | 70-80 | 2.8 |
| Em 7 | 9-11 | Square as shown in FIG. 7 with side length of 130 µm | 10 | 92.7 | 89.3 | 130-150 | 1.9 |
| CE 1 | 9-11 | Square with a side length of 130µm | 120 | 46.8 | 84.5 | 15-25 | 3.9 |

**TABLE 1 EXPERIMENTAL COMPARISON TABLE OF EMBODIMENTS 1-7 AND COMPARATIVE EXAMPLE 1 (CONTINUED)**

| | Light transmittance 3 /% | Haze 3 /% | Thickness 3 /mm | Weight 3 /g | Thickness 4 /mm | Weight 4 /g |
|---|---|---|---|---|---|---|
| Em 1 | 86.9 | 2.36 | 0.58 | 14.3 | 1.1 | 35.5 |
| Em 2 | 87.2 | 2.03 | 0.71 | 17.5 | 1.25 | 39.1 |
| Em 3 | 88.7 | 1.56 | 0.45 | 10.2 | 0.98 | 31.4 |
| Em 4 | 87.6 | 1.32 | 0.58 | 14.3 | 1.1 | 35.5 |
| Em 5 | 84.2 | 3.63 | 0.58 | 14.3 | 1.1 | 35.5 |
| Em 6 | 86.3 | 2.96 | 0.58 | 14.3 | 1.1 | 35.5 |
| Em 7 | 87.8 | 2.3 | 0.58 | 14.3 | 1.1 | 35.5 |
| CE 1 | 80.6 | 4.3 | 0.58 | 14.3 | 1.1 | 35.5 |

Wherein, thickness 1, light transmittance 1, haze 1, and sheet resistance 1 in the tables above refer to the thickness, the light transmittance, the haze, and the sheet resistance of a base film and a conductive layer before yellow light etching, respectively; light transmittance 2, sheet resistance 2, and haze 2 refer to the light transmittance, the sheet resistance, and the haze of a conductive film, respectively; light transmittance 3, haze 3, thickness 3, and weight 3 refer to the light transmittance, the haze, the thickness, and the weight of a touch functional sheet, respectively; and thickness 4 and weight 4 refer to the thickness and the weight of a G cover plate and a touch functional sheet, respectively.

It should be noted that the touch functional sheets in Embodiments 1-7 and Comparative Example 1 all have a size of 7.0 inches. A G (Glass) cover plate and the touch functional sheet form a touch module with a GFF-structure. The G cover plate is a glass cover plate of 0.4 mm with three layers of OCA, and thicknesses of the three layers of OCA are 125 µm, 125 µm, and 200 µm, respectively. A conventional GG-ITO touch module of 7.0 inches, calculated using the thinnest ITO glass of 0.4 mm, includes two layers of OCA each of whose thicknesses is 0.2 mm. The weight of the conventional GG-ITO touch module is about 50 g or more, and the thickness of the conventional GG-ITO touch module is about 1.2 mm or more.

If a P (Plastics) cover plate is used in the embodiment, i.e., a PFF structure, the overall thickness of the touch module is within a range from 60% to 80% of the thickness of the GFF, and the weight is within a range from 45% to 60% of the weight of the GFF.

As seen from the Table 1, compared with Embodiments 5-7, when the width of the conductive grid lines in Comparative Example 1 is 120 µm and the ratio of the total area of the hollow grids to the area of the first conductive region is 46.8%, the haze of the prepared touch assembly is larger than that of Embodiments 5-7, reaching 4.3%.

As seen from the Table 1, the light transmittance of the conductive film prepared according to the preparation method of the conductive film in the above embodiments can be 80% or more, and the haze of the conductive film can be 4% or less. The light transmittance of the touch functional sheet prepared using the above conductive film can also basically be 80% or more. The haze of the touch functional sheet can be 3.63% or less. It should be noted that the various parameters in the above table are only parameter records of individual experimental data, and do not mean that all of the above parameters must be used to improve the effect of the light transmittance and the haze of the conductive film. For example, when the solid content of the silver nanowire ink is different from the content recorded in the Embodiments 1-7 in the table, the light transmittance of the conductive film prepared according to the preparation method of the conductive film described above can also be 80% or more, and the haze thereof can also be less than 4%.

The present disclosure further provides a touch electrode. The touch electrode includes the conductive film mentioned above. In some embodiments, the touch electrode may include a touch pattern and lead wires. The touch pattern may be formed in the first conductive region of the conductive film. The lead wires may be formed in the second conductive region of the conductive film. Since the first conductive region of the conductive film has relatively excellent optical performance, the touch electrode also has relatively excellent optical performance.

Some embodiments of the present disclosure further provides a method for preparing a touch electrode using the conductive film mentioned above. The method includes preparing a touch pattern of the touch electrode in the first conductive region through laser etching; and preparing lead wires of the touch electrode in the second conductive region through laser etching. In the embodiments of the present disclosure, the laser etching can perform the preparation of the touch pattern and the lead wires of the touch electrode in one step, which eliminates the need for traditional operations, such as screen-printing with silver paste, thereby simplifying the production process of the touch electrode and improving the preparation efficiency of the touch electrode.

In some embodiments, a visible light transmittance of the touch electrode is within a rang from 80% to 92%.

In some embodiments, a haze of the touch electrode is within a range from 0.8% to 4.0%.

It should be noted that the above descriptions regarding the touch electrode and the preparation method thereof are merely for illustration and explanation, and do not limit the applicable scope of the present disclosure. For those skilled in the art, various modifications and changes can be made to the touch electrode and the preparation method thereof under the guidance of the present disclosure. However, these modifications and changes still fall within the scope of the present disclosure.

Table 2 shows relevant experimental data of the conductive film prepared according to the preparation method. It should be noted that Table 2 does not list all relevant parameters.

**TABLE 2 COMPARISON TABLE OF EMBODIMENTS 8-12 (Em 8-12) AND COMPARATIVE EXAMPLE 2 (CE 2)**

| | Sheet resistance 1 /Ω/□ | Light transmittance 1 /% | Arrangement shape of conductive grid lines | Width of conductive grid lines /µm | Ratio of total area of hollow grids to area of conductive layer /% |
|---|---|---|---|---|---|
| Em 8 | 4.5~5.5 | 75.5 | Rhombus with acute angle of 33° and side length of 100 µm | 15 | 90 |
| Em 9 | <0.5 | 20.3 | Rhombus with acute angle of 33° and side length of 50 µm | 3 | 94 |
| Em 10 | 9~11 | 81.2 | Square with side length of 150 µm | 20 | 86.9 |
| Em 11 | 9~11 | 81.2 | Square with side length of 150 µm | 15 | 89.9 |
| Em 12 | 9~11 | 81.2 | Square with side length of 150 µm | 12 | 91.8 |
| CE 2 | 9~11 | 81.2 | Square with side length of 150µm | 70 | 63.4 |

**TABLE 2 COMPARISON TABLE OF EMBODIMENTS 8-12 AND COMPARATIVE EXAMPLE 2 (CONTINUED)**

| | Size of first conductive region /inch | Minimum spacing between two adjacent first conductive regions /mm | Light transmittance of base film and first conductive region of conductive film /% | Sheet resistance of first conductive region of conductive film /Ω/□ | Haze of base film and first conductive region of conductive film /% |
|---|---|---|---|---|---|
| Em 8 | 7.0 | 24 | 85.5 | 50-60 | 2.6 |
| Em 9 | 13.3 | 26 | 88.6 | 4~6 | 3.2 |
| Em 10 | 7.0 | 24 | 85.9 | 70~90 | 2.3 |
| Em 11 | 7.0 | 24 | 86.8 | 100~130 | 1.91 |
| Em 12 | 7.0 | 24 | 89.1 | 120~150 | 1.78 |
| CE 2 | 7.0 | 24 | 82.5 | 30~40 | 4.2 |

As seen from Table 2, the light transmittance of the base film and the first conductive region of the conductive film prepared according to the preparation method (the yellow light etching) of the conductive film in the above embodiments can be larger than 88%, and the haze of the base film and the first conductive region can be less than 3.2%. It should be noted that the various parameters in the above table are only parameter records of single experimental data, and do not mean that all of the above parameters must be used to improve the effect of the light transmittance and the haze of the first conductive region of the conductive film. For example, when the sheet resistance of the base film and the conductive layer before the yellow light etching is different from the parameters recorded in the Embodiments 8-10 in the above table, the light transmittance of the base film and the first conductive region of the conductive film prepared according to the preparation method of the conductive film described above can also be larger than 85%, and the haze thereof can also be less than 3.2%.

The embodiments of the present disclosure at least bring the following the possible beneficial effects. (1) The conductive region including the conductive grid structure (e.g., the first conductive region) can be used to prepare the touch pattern of the touch electrode, and the conductive region not including the conductive grid structure (e.g., the second conductive region) can be used to prepare the lead wires of the touch electrode, thereby facilitating the preparation of the touch electrode. Meanwhile, the touch pattern and the lead wires of the touch electrode can be prepared at one time by using the laser etching without traditional operations such as screen-printing with silver paste, thereby simplifying the production process of the touch electrode and improving the preparation efficiency of the touch electrode. (2) The base film and the conductive region including the conductive grid structure (e.g., the first conductive region) have excellent optical performance, wherein the visible light transmittance can be larger than or equal to 80% (e.g., within a range from 80% to 92%), and the haze can be within a range from 0.8% to 4.0%. (3) Compared with the laser etching, the embodiments of the present disclosure prepare the conductive film with a specific structure (e.g., the first conductive region) through the yellow light etching, which can improve the production efficiency of the conductive film and is applied for large-scale batch production. (4) The touch assembly prepared using the conductive film has excellent optical performance, wherein the light transmittance is larger than or equal to 80% (e.g., within a range from 80% to 92%), and the haze can be within a range from 0.8% to 4.0%. (5) Through the design of the hollow grids in the conductive region including the conductive grid structure, the reflection and scattering of the visible light by randomly distributed nano metal wires are reduced, and the proportion of the hollow grids is within a range from 60% to 97%, thereby solving the optical issues such as whitening, yellowing, or hazing in later specific applications of the nano metal wire conductive layer, and greatly improving the optical appearance and performance. (6) By laminating two touch sensor electrodes through the optical clear adhesive (OCA), the optical clear adhesive can fill the hollow grids in the conductive region including the conductive grid structure, thereby reducing the reflection and scattering of the visible light by the touch pattern, and improving the optical performance of the touch functional sheet. (7) The conductive protective layer is located in the net gaps formed by the nano metal wires in the nano metal wire layer, or the thickness of the conductive protective layer is less than the thickness of the nano metal wire layer. This not only enables various etching solutions to be effectively applied for etching the conductive grid structure, but also increases the contact points between the etching solution and the nano metal wire layer, thereby facilitating the etching of the nano metal wire layer in a short time and improving the etching efficiency. (8) The maximum cycle of the conductive grid structure is not larger than 60% of the pixel array pitch of the display where the conductive film is applies, thereby further improving the optical appearance of the display after the touch assembly using the conductive film is attached to the display. Specifically, the touch display has a uniform optical effect and/or invisible etching traces when the screen is off, and has no scattered points and/or moire patterns when the screen is on.

It should be noted that different embodiments may have different beneficial effects. In different embodiments, possible beneficial effects may be any of the above effects, or any combination thereof, or any other beneficial effects that may be obtained.

The basic concepts have been described above. Obviously, for those skilled in the art, the detailed disclosure is merely by way of example, and does not constitute a limitation on the present disclosure. Although not explicitly stated here, those skilled in the art may make various modifications, improvements, and amendments to the present disclosure. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment," "one embodiment," or "an alternative embodiment" in various portions of this specification are not necessarily all referring to the same embodiment. In addition, certain features, structures, or characteristics in one or more embodiments of the present disclosure may be appropriately combined.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installing on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. However, this disclosure method does not mean that the present disclosure object requires more features than the features mentioned in the claims. Rather, claimed subject matter may lie in less than all features of a single foregoing disclosed embodiment.

In some embodiments, numbers expressing quantities of ingredients, properties, and so forth, used to describe and claim certain embodiments of the application are to be understood as being modified in some instances by the term "about," "approximate," or "substantially". Unless otherwise stated, "about," "approximate," or "substantially" may indicate ±20% variation of the value it describes. Accordingly, in some embodiments, the numerical parameters set forth in the description and attached claims are approximations that may vary depending upon the desired properties sought to be obtained by a particular embodiment. In some embodiments, the numerical parameters should be construed in light of a count of reported significant digits and by applying ordinary rounding techniques. Notwithstanding that the numerical ranges and parameters configured to illustrate the broad scope of some embodiments of the present disclosure are approximations, the numerical values in specific examples may be as accurate as possible within a practical scope.

Each patent, patent application, patent application publication and other materials cited herein, such as articles, books, instructions, publications, documents, etc., are hereby incorporated by reference in their entirety. In addition to the application history documents that are inconsistent or conflicting with the contents of the present disclosure, the documents that may limit the widest range of the claim of the present disclosure (currently or later attached to this application) are excluded from the present disclosure. It should be noted that if the description, definition, and/or terms used in the appended application of the present disclosure is inconsistent or conflicting with the content described in the present disclosure, the use of the description, definition and/or terms of the present disclosure shall prevail.

At last, it should be understood that the embodiments described in the present disclosure are merely illustrative of the principles of the embodiments of the present disclosure. Other modifications may be within the scope of the present disclosure. Accordingly, by way of example, and not limitation, alternative configurations of embodiments of the present disclosure may be considered to be consistent with the teachings of the present disclosure. Accordingly, embodiments of the present disclosure are not limited to the embodiments that are expressly introduced and described herein.

## Claims

1. A conductive film, comprising:
a base film; and
a conductive layer covering the base film, wherein
the conductive layer includes one or more conductive regions;
at least one of the one or more conductive regions includes a conductive grid structure; and
the conductive grid structure includes hollow grids and conductive grid lines.

2. The conductive film of claim 1, wherein
the one or more conductive regions include a plurality of conductive regions, and the plurality of conductive regions include a first conductive region and a second conductive region,
the first conductive region includes the conductive grid structure;
the second conductive region is disposed around the first conductive region and is connected to the conductive grid lines; and
a sheet resistance of the first conductive region is larger than a sheet resistance of the second conductive region.

3. The conductive film of claim 2, wherein the conductive layer has at least two first conductive regions, and the second conductive region is disposed between two adjacent first conductive regions among the at least two first conductive regions.

4. The conductive film of claim 3, wherein
the at least two first conductive regions are arranged in an array; and
a shape of the first conductive region is a circle or a polygon.

5. The conductive film of claim 3, wherein a minimum spacing between the two adjacent first conductive regions is within a range from 200 millimeters (mm) to 350 mm.

6. The conductive film of claim 2, wherein
a ratio of the sheet resistance of the first conductive region to the sheet resistance of the second conductive region is not less than 5;
the sheet resistance of the first conductive region is within a range from 5 ohms per square (Ω/□) to 150 Ω/□, and the sheet resistance of the second conductive region is within a range from 0.1 Ω/□ to 50 Ω/□.

7. The conductive film of claim 2, wherein
a visible light transmittance of the base film and the first conductive region is larger than a visible light transmittance of the base film and the second conductive region;
the visible light transmittance of the base film and the first conductive region is within a range from 80% to 92%, and the visible light transmittance of the base film and the second conductive region is within a range from 20% to 90%.

8. The conductive film of claim 1, wherein
the conductive grid structure is formed by performing yellow light etching on the conductive layer.

9. The conductive film of claim 1, wherein the conductive layer includes a conductive nano layer, and the conductive nano layer includes at least one of a nano metal layer or a nano metal wire layer,
the nano metal layer includes at least one of gold nanoparticle, silver nanoparticle, copper nanoparticle, platinum nanoparticle, palladium nanoparticle, aluminum nanoparticle, tin nanoparticle, lead nanoparticle, or titanium nanoparticle; and
the nano metal wire layer includes at least one of silver nanowire, gold nanowire, copper nanowire, platinum nanowire, aluminum nanowire, titanium nanowire, or tin nanowire.

10. The conductive film of any one of claims 1 to 9, wherein the conductive layer comprises a nano metal wire layer and a conductive protective layer, and the hollow grids are formed by etching the nano metal wire layer and the conductive protective layer through yellow light etching.

11. The conductive film of claim 10, wherein
a light transmittance of the base film and the conductive layer before the yellow light etching is within a range from 20% to 90%.

12. The conductive film of claim 10, wherein
a square resistance of the base film and the conductive layer before the yellow light etching is within a range from 0.1 Ω/□ to 50 Ω/□.

13. The conductive film of claim 10, wherein
a thickness of the conductive layer before the yellow light etching is within a range from 50 nanometers (nm) to 300 nm.

14. The conductive film of claim 10, wherein
a haze of the base film and the conductive layer before the yellow light etching is within a range from 1.0% to 30%.

15. The conductive film of claim 10, wherein
the conductive protective layer includes a polymer layer, and a thickness of the polymer layer is within a range from 0.5 nm to 10 nm.

16. The conductive film of claim 10, wherein
the conductive protective layer includes a metal oxide layer, and a thickness of the metal oxide layer is within a range from 10 nm to 50 nm.

17. The conductive film of claim 1, wherein
for each conductive region including the conductive grid structure, a ratio of a total area of the hollow grids to an area of the conductive region is larger than or equal to 60% and less than or equal to 97%.

18. The conductive film of claim 1, wherein
a width of the conductive grid lines is within a range from 3 microns (µm) to 30 µm.

19. The conductive film of claim 1, wherein
a maximum cycle of the conductive grid structure is not larger than 60% of a pixel array cycle of a display where the conductive film is applied.

20. The conductive film of claim 1, wherein
a material of the base film includes at least one of polyester, cycloolefin polymer, colorless polyimide, polypropylene, polyethylene, triacetate fiber, poly (ethylene terephthalate-co-1,4-cyclohexylenedimethylene terephthalate) (PETG), thermoplastic urethane (TPU), polyvinyl alcohol (PVA), or polycarbonate (PC).

21. The conductive film of claim 1, wherein the conductive layer further includes colored particles, and a particle size of the colored particles is within a range from 0.05 µm to 1.0 µm.

22. The conductive film of claim 1, wherein
a light transmittance of the base film and the conductive region including the conductive grid structure is larger than or equal to 80%.

23. The conductive film of claim 1, wherein
a square resistance of the conductive region including the conductive grid structure is within a range from 5 Ω/□ to 150 Q/o.

24. The conductive film of claim 1, wherein
a haze of the base film and the conductive region including the conductive grid structure is within a range from 0.8% to 4.0%.

25. The conductive film of claim 10, wherein
at least a portion of the conductive protective layer is located in net gaps formed by nano metal wires in the nano metal wire layer.

26. The conductive film of claim 25, wherein
at least a portion of the nano metal wire layer protrudes from the conductive protective layer.

27. The conductive film of claim 25, wherein
a thickness of the conductive protective layer is within a range from 30% to 110% of a thickness of the nano metal wire layer.

28. The conductive film of claim 25, wherein
a thickness of the conductive protective layer is within a range from 30% to 80% of a thickness of the nano metal wire layer.

29. The conductive film of claim 25, wherein
a thickness of the conductive protective layer is within a range from 50% to 80% of a thickness of the nano metal wire layer.

30. A preparation method of a conductive film, comprising:
preparing a conductive layer on a base film; and
obtaining the conductive film by etching the conductive layer, wherein
the conductive layer includes one or more conductive regions;
at least one of the one or more conductive regions includes a conductive grid structure; and
the conductive grid structure includes hollow grids and conductive grid lines.

31. The preparation method of claim 30, wherein the one or more conductive regions includes a plurality of conductive regions, the plurality of conductive regions include a first conductive region having the conductive grid structure, and the etching the conductive layer comprises:
forming, through yellow light etching, the first conductive region including the conductive grid structure on the conductive layer.

32. The preparation method of claim 30, wherein the conductive layer includes a nano metal wire layer and a conductive protective layer, and the hollow grids are formed by etching the nano metal wire layer and the conductive protective layer through yellow light etching.

33. A touch assembly, comprising:
the conductive film according to any one of claims 1-29.

34. The touch assembly of claim 33, wherein
the plurality of conductive regions include a first conductive region and a second conductive region, the first conductive region includes the conductive grid structure, the second conductive region is disposed around the first conductive region, and the second conductive region is connected to the conductive grid lines; and
the touch assembly includes a touch pattern and lead wires, wherein
the touch pattern is formed in the first conductive region; and
the lead wires are formed in the second conductive region.

35. The touch assembly of claim 33, wherein
a light transmittance of the touch assembly is larger than or equal to 80%.

36. The touch assembly of claim 33, wherein
a haze of the touch assembly is within a range from 1.0% to 4.0%.

37. A method for preparing a touch assembly using the conductive film according to any one of claims 1-29, wherein
the plurality of conductive regions include a first conductive region and a second conductive region, the first conductive region includes the conductive grid structure, the second conductive region is disposed around the first conductive region, and the second conductive region is connected to the conductive grid lines, and
the method comprises:
preparing, through laser etching, a touch pattern of the touch assembly in the first conductive region; and
preparing, through laser etching, lead wires of the touch assembly in the second conductive region.
